# EUROPEAN PATENT SPECIFICATION

(11) **EP 3 064 798 B1**
(45) Date of publication and mention of the grant of the patent: **09.05.2018**
(21) Application number: 16158606.0
(22) Date of filing: 04.03.2016
(51) Int. Cl.: F16F 9/06, F16F 9/18

(54) **SUSPENSION DEVICE**
AUFHÄNGUNGSVORRICHTUNG
DISPOSITIF DE SUSPENSION

(30) Priority: 06.03.2015 JP 2015044950
(43) Date of publication of application: 07.09.2016
(73) Proprietor: Showa Corporation, Saitama 361-8506 (JP)
(72) Inventor: NAKAGAWA, Takashi, Shizuoka 437-1194 (JP); MINOURA, Tomoyuki, Shizuoka 437-1194 (JP)
(74) Representative: Nordmeyer, Philipp Werner

(56) References cited:
- EP-A2- 2 899 110

## Description

### BACKGROUND

### 1. Technical Field

The present invention relates to a suspension device disposed between a vehicle body and a wheel.

### 2. Related Art

Conventionally, a device in which a passage is formed in a piston that moves in an axial direction of a cylinder so that oil circulates along the passage to generate damping force is proposed as a front fork (a suspension device) used in a vehicle such as a motorcycle.

For example, WO 2008/085097 discloses a front fork having a first volume which is at least partially filled with a first fluid which is oil. An outer structure of the front fork is formed by an outer member and an inner member that move in relation to each other when external force is applied thereto. The movement is controlled by a main spring and is dampened by a damping unit. The damping unit is a damping cylinder which is sealed from the first volume inside the front fork and is filled with a second fluid pressurized at a pressure higher than ambient pressure. The damping cylinder has a second volume that is divided into two damping chambers by a piston fixed by a piston rod. The piston rod extends to a first sealing head fixed to one end of the damping cylinder. A third chamber which is a member separated from a main body and is filled with gas which is preferably air is disposed on an outer side of the damping cylinder so as to be adjacent to the first sealing head. At least one seal that hermetically implements sealing between fluid and gas is disposed at a boundary between the gas-filled third chamber and the oil-filled first chamber of the front fork and a boundary between the gas-filled third chamber and the oil-filled second chamber of the damping cylinder. The seal is preferably an X-ring or a lip seal (packing) (see WO 2008/085097 and the like).

Moreover, the present applicant has filed a patent application (Japanese Patent Application No. 2014-073454) for a suspension device. The suspension device includes a telescopic device, and a damping force generating device, and a compensating device. The telescopic device includes an inner tube attached to a one-end-side attachment portion and an outer tube attached to the other-end-side attachment portion. The inner tube and the outer tube are slidable in relation to each other. Oil is stored inside the inner tube and the outer tube. The telescopic device includes a cylinder disposed inside the inner tube, a piston that slides on an inner circumferential surface of the cylinder, and a rod guide which is disposed in an end opening of the cylinder and through which a rod having the piston passes. A packing provided in an inner circumferential surface of a through-hole of the rod guide seals the space between the inner circumferential surface of the through-hole and an outer circumferential surface of the rod. The telescopic device can perform a compression operation of allowing the one-end-side attachment portion and the other-end-side attachment portion to move closer to each other and an extension operation of allowing the one-end-side attachment portion and the other-end-side attachment portion to move away from each other. The damping force generating device generates damping force with movement of oil during compression and extension of the telescopic device. The compensating device compensates for a variation in oil volume when the oil volume varies.

According to the suspension device, when the oil inside the suspension device expands due to heat or when oil adhering to the outer circumferential surface of the rod or the oil outside the cylinder enters into the cylinder through a space between the outer circumferential surface of the rod and the packing during the compression operation, for example, the compensating device may become unable to tolerate the variation in the oil volume. Thus, an internal pressure of the oil inside the suspension device may increase. If the internal pressure of the oil inside the suspension device exceeds a predetermined internal pressure, in some cases, a relatively weak portion such as an adjuster of the compensating device, for example, may be broken. Thus, in general, when a travel distance of a vehicle reaches a predetermined distance, it is necessary to perform a disassembling inspection (an overhaul and the like) of the suspension device to decrease the increased internal pressure of the oil inside the suspension device. Therefore, there is a demand for a suspension device which can be used for a longer travel distance without requiring the disassembling inspection.

### SUMMARY OF INVENTION

The present invention has been made in view of the above problems and an object thereof is to provide a suspension device which can be used for a longer travel distance without requiring a disassembling inspection.

According to a first aspect of the present invention, there is provided a suspension device comprising a telescopic device, a damping force generating device, and a compensating device, the telescopic device including: a cylindrical outer tube, one end of which is open and the other end of which is attached to an other-end-side attachment portion; a cylindrical inner tube, one end side of which is attached to a one-end-side attachment portion, and the other-end-side opening of which is inserted into the outer tube through a one-end-side opening of the outer tube; a first packing provided on an inner side near the one-end-side opening of the outer tube so as to seal an outer circumferential surface of the inner tube; a cylindrical outer-side cylinder which is disposed on an inner side of the inner tube, and the one end side of which is attached to the one-end-side attachment portion; a cylindrical inner-side cylinder which is disposed on an inner side of the outer-side cylinder, and the one end side of which is attached to the one-end-side attachment portion; a rod, the other end side of which is attached to the other-end-side attachment portion, and the one end side of which is inserted into the inner-side cylinder through the other-end-side opening of the inner-side cylinder; a rod guide which is formed of an annular columnar body having a through-hole for allowing the rod to pass therethrough, and in which an outer circumferential surface is engaged with an inner circumferential surface near the other-end-side opening of the outer-side cylinder and an inner circumferential surface near the other-end-side opening of the inner-side cylinder, whereby a space between the outer circumferential surface of the rod guide and the inner circumferential surface near the other-end-side opening of the outer-side cylinder is sealed by a gasket, and in which a space between an inner circumferential surface of the through-hole and an outer circumferential surface of the rod is sealed by a second packing; a piston provided near one end of the rod positioned on an inner side of the inner-side cylinder to be slidable on the inner circumferential surface of the inner-side cylinder; an inner-side-cylinder-other-end-side liquid storage chamber surrounded by the rod guide, the piston, and the inner circumferential surface of the inner-side cylinder; a connection hole formed in a cylinder wall near the other-end-side opening of the inner-side cylinder to pass through the inner side of the inner-side cylinder and the inner side of the outer-side cylinder; and a liquid stored inside the outer tube and the inner tube,
the telescopic device being configured to perform a compression operation of allowing the one-end-side attachment portion and the other-end-side attachment portion to move closer to each other and an extension operation of allowing the one-end-side attachment portion and the other-end-side attachment portion to move away from each other,
the damping force generating device being attached to the one-end-side attachment portion and including: a first entrance port that is connected to an inner-side-cylinder-one-end-side liquid storage chamber positioned closer to the one end side than the piston on the inner side of the inner-side cylinder through a first connection path formed in the one-end-side attachment portion; a second entrance port that is connected to an annular cylinder liquid storage chamber formed between the outer circumferential surface on one end side of the inner-side cylinder and the inner circumferential surface on one end side of the outer-side cylinder through a second connection path formed in the one-end-side attachment portion; a third entrance port; and a compression-operation passage and an extension-operation passage that generate damping force, using a passage resistance when liquid passes,
during the compression operation, the damping force generating device generating damping force using a passage resistance when liquid, which is pressurized by the piston to flow through the first entrance port from the inner-side-cylinder-one-end-side liquid storage chamber, flows through the compression-operation passage, thereby allowing the liquid to flow into the annular cylinder liquid storage chamber through the second entrance port,
during the extension operation, the damping force generating device generating damping force using a passage resistance when liquid, which is pressurized by the piston to flow through the second entrance port from the inner-side-cylinder-other-end-side liquid storage chamber after passing through the connection hole and the annular cylinder liquid storage chamber, passes through the extension-operation passage, thereby allowing the liquid to flow into the inner-side-cylinder-one-end-side liquid storage chamber through the first entrance port,
the compensating device including: a cylindrical cylinder; and a free piston provided in the cylinder to be movable along a central axis of the cylinder,
a one-end-side opening of the cylinder being attached to the one-end-side attachment portion while the other-end-side opening of the cylinder is hermetically sealed, and a liquid-volume-variation-compensating liquid storage chamber formed on a side of the one-end-side opening of the cylinder is connected to the third entrance port of the damping force generating device through a third connection path formed in the one-end-side attachment portion,
during the compression operation, the free piston moving toward the other end side by the pressure of the liquid flowing from the damping force generating device into the liquid-volume-variation-compensating liquid storage chamber through the third entrance port, and
during the extension operation, the liquid in the liquid-volume-variation-compensating liquid storage chamber flowing into the damping force generating device through the third entrance port whereby the free piston moves toward the one end side,
the suspension device further comprising: a liquid discharge port formed in the liquid-volume-variation-compensating liquid storage chamber of the compensating device; an outer annular liquid storage chamber formed between the outer-side circumferential surface on the one end side of the outer-side cylinder and the inner circumferential surface of the one end side of the inner tube, and a liquid discharge path that connects the liquid discharge port and the outer annular liquid storage member,
the compensating device including an opening/closing control mechanism that opens the liquid discharge port to allow the liquid-volume-variation-compensating liquid storage chamber and the liquid discharge path to be connected to each other so that the liquid in the liquid-volume-variation-compensating liquid storage chamber flows into the outer annular liquid storage chamber through the liquid discharge port and the liquid discharge path when an amount of the liquid in the liquid-volume-variation-compensating liquid storage chamber exceeds a predetermined amount, and that closes the liquid discharge port to block the connection between the liquid-volume-variation-compensating liquid storage chamber and the liquid discharge path when the amount of the liquid in the liquid-volume-variation-compensating liquid storage chamber does not exceed the predetermined amount. And, in a case where the liquid outside the outer-side-cylinder entering into the liquid-volume-variation-compensating liquid storage chamber of the compensating device through a space between the outer circumferential surface of the rod and the second packing, the inner side of the inner-side cylinder, the connection hole, the annular cylinder liquid storage chamber, and the damping force generating device, and then the amount of the liquid in the liquid-volume-variation-compensating liquid storage chamber exceeds the predetermined amount, the liquid in the liquid-volume-variation-compensating liquid storage chamber returns to an outside of the outer-side cylinder through the liquid discharge port, the liquid discharge path, and the outer annular liquid storage chamber.

According to a second aspect of the present invention, the cylinder of the compensating device includes an outer cylinder and an inner cylinder, a compensating-device-side path of the liquid discharge path is formed by an annular space formed between an inner circumferential surface of the outer cylinder and an outer circumferential surface of the inner cylinder, a one-end-side path of the liquid discharge path that allows the compensating-device-side path and the outer annular liquid storage chamber to be connected to each other is formed in the one-end-side attachment portion, the liquid discharge port is formed in a wall surface of the inner cylinder to pass through the inner side of the inner cylinder and the compensating-device-side path, the opening/closing control mechanism is formed by an annular sealing member which is provided on an outer circumferential surface of the free piston to maintain a liquid-tight state with the inner circumferential surface of the inner cylinder, and which blocks the connection between the liquid discharge port and the liquid-volume-variation-compensating liquid storage chamber formed on the one end side of the inner cylinder when the annular sealing member is positioned closer to the one end side than the liquid discharge port, and which allows the connection between the liquid discharge port and the liquid-volume-variation-compensating liquid storage chamber formed on the one end side of the inner cylinder when the annular sealing member is positioned closer to the other end side than the liquid discharge port.

According to a third aspect of the present invention, a tool insertion hole, through which a tool for rotating the rod guide to allow the outer circumferential surface of the rod guide to engage with the inner circumferential surface of the outer-side cylinder is inserted, is formed on the other end side of a through-hole formed in the rod guide, and the liquid storage chamber is formed between an inner circumferential surface of the tool insertion hole and the outer circumferential surface of the rod.

According to a fourth aspect of the present invention, the suspension device further includes a cylindrical spring collar, one end side of which is inserted into the inner tube through the other-end-side opening of the inner tube and the other end side of which is attached to and sealed by the other-end-side attachment portion; and a spring disposed in the outer annular liquid storage chamber between one end of the spring collar and the one-end-side attachment portion to absorb a shock during the compression operation of the telescopic device.

According to a fifth aspect of the present invention, the other-end-side attachment portion includes an adjuster for adjusting a length of the spring configured to be movable along a central axis of the telescopic device.

According to a sixth aspect of the present invention, the one-end-side attachment portion is connected to an axle side of a motorcycle, and the other-end-side attachment portion is connected to a vehicle body side of the motorcycle.

According to the suspension device of the first aspect, the liquid outside the outer-side cylinder enters into the liquid-volume-variation-compensating liquid storage chamber of the compensating device through the space between the outer circumferential surface of the rod and the second packing, the inner side of the inner-side cylinder, the connection hole, the annular cylinder liquid storage chamber, and the damping force generating device, and when the amount of liquid in the liquid-volume-variation-compensating liquid storage chamber exceeds the predetermined amount, the liquid in the liquid-volume-variation-compensating liquid storage chamber returns to the outside of the outer-side cylinder through the liquid discharge port, the liquid discharge path, and the outer annular liquid storage chamber. Therefore, it is possible to prevent an internal pressure of the liquid (oil) in the suspension device from increasing with time and to prevent excessively large pressure from being applied to a portion in the suspension device. Therefore, it is possible to provide a maintenance-free suspension device which can be used for a longer travel distance without requiring the disassembling inspection for decreasing the internal pressure of liquid in the suspension device whenever the travel distance of a vehicle having the suspension device attached thereto reaches a predetermined distance.

According to the suspension device of the second aspect, the opening/closing control mechanism is formed by an annular sealing member which is provided on an outer circumferential surface of the free piston so as to maintain a liquid-tight state with the inner circumferential surface of the inner-side cylinder, the annular sealing member blocks the connection between the liquid discharge port and the liquid-volume-variation-compensating liquid storage chamber formed on the one end side of the inner-side cylinder when the annular sealing member is positioned closer to the one end side than the liquid discharge port, and the annular sealing member allows the connection between the liquid discharge port and the liquid-volume-variation-compensating liquid storage chamber formed on the one end side of the inner-side cylinder when the annular sealing member is positioned closer to the other end side than the liquid discharge port. Thus, when the amount of liquid in the liquid-volume-variation-compensating liquid storage chamber exceeds a predetermined amount, the liquid returns to the outside of the outer-side cylinder. Therefore, it is possible to prevent the internal pressure of the liquid in the suspension device from increasing with time and to prevent excessively large pressure from being applied to a portion in the suspension device. Therefore, it is possible to provide a maintenance-free suspension device which can be used for a longer travel distance without requiring the disassembling inspection for decreasing the internal pressure of liquid in the suspension device whenever the travel distance of a vehicle having the suspension device attached thereto reaches a predetermined distance.

According to the suspension device of the third aspect, since the rod guide has the tool insertion hole, the rod guide can be attached and detached easily. Moreover, since a liquid storage chamber is formed between the inner circumferential surface of the tool insertion hole and the outer circumferential surface of the rod, even if liquid is likely to flow from the liquid storage chamber into the inner-side-cylinder-other-end-side liquid storage chamber, the oil is caused to return to the outside of the outer-side cylinder through the compensating device. Therefore, it is possible to prevent the internal pressure of the liquid in the suspension device from increasing with time.

According to the suspension device of the fourth aspect, during the compression operation of the telescopic device, the spring collar moves toward the one end side whereby the spring is contracted to absorb the shock during the compression operation of the telescopic device.

According to the suspension device of the fifth aspect, by operating the adjuster to adjust the position of the spring collar, it is possible to adjust the length of the spring and to adjust the initial set load of the spring.

According to the suspension device of the sixth aspect, since the one-end-side attachment portion is connected to an axle side of a motorcycle, and the other-end-side attachment portion is connected to a vehicle body side of the motorcycle, it is possible to form a front fork having the above-described advantages.

### BRIEF DESCRIPTION OF DRAWINGS

FIG. 1 is a cross-sectional view illustrating a suspension device;
FIG. 2 is an enlarged cross-sectional view illustrating a configuration near a one-end-side attachment portion of the suspension device;
FIG. 3 is an enlarged cross-sectional view illustrating a configuration near a central portion of the suspension device;
FIG. 4 is an enlarged cross-sectional view illustrating a configuration near the other-end-side attachment portion of the suspension device;
FIG. 5 is a cross-sectional view illustrating a damping force generating device;
FIGS. 6A to 6C are cross-sectional views illustrating states when the suspension device performs a compression operation and an extension operation and oil enters therein;
FIG. 7 is an enlarged cross-sectional view illustrating a flow of oil when the suspension device performs a compression operation;
FIG. 8 is an enlarged cross-sectional view illustrating a flow of oil when the suspension device performs an extension operation; and
FIG. 9 is an enlarged cross-sectional view illustrating a flow of oil when oil enters into the suspension device.

### DESCRIPTION OF EMBODIMENTS

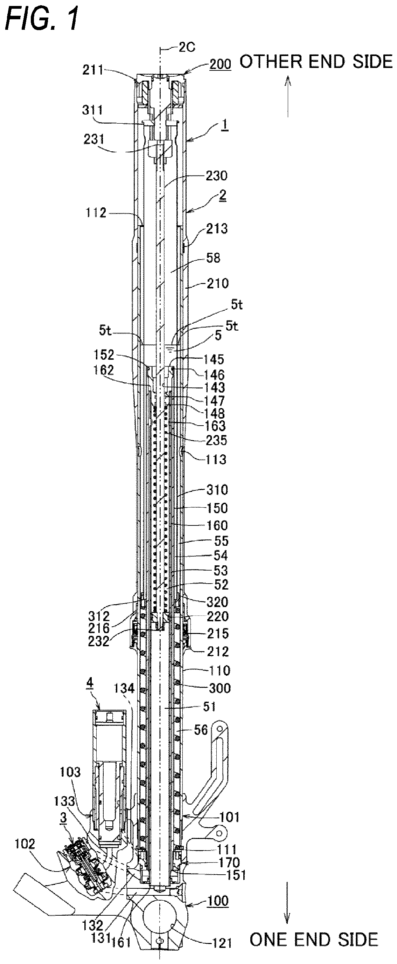

A suspension device according to an embodiment will be described based on FIGS. 1 to 9.

In the description of the present specification, the sides indicated by arrows in the drawings are defined as one end side and the other end side.

As illustrated in FIG. 1, a suspension device 1 according to the embodiment includes a telescopic device 2, a damping force generating device 3, and a compensating device 4.

The telescopic device 2 is formed by combining an inner tube 110 formed in a cylindrical form, an outer tube 210 formed in a cylindrical form, a spring collar 310 formed in the cylindrical form, an outer-side cylinder 150 formed in the cylindrical form, an inner-side cylinder 160 formed in the cylindrical form, a bar-shaped rod 230, a rod guide 145 fixed to an inner side near the other end of the outer-side cylinder 150 and an inner side near the other end of the inner-side cylinder 160, a piston 220 provided near one end of the rod 230 which is inserted into the inner-side cylinder 160 by passing through a through-hole 143 of the rod guide 145, a one-end-side attachment portion 100, and an other-end-side attachment portion 200.

The outer tube 210 has a larger inner diameter than that of the inner tube 110, which is larger than that of the spring collar 310, which is larger than that of the outer-side cylinder 150, which is larger than that of the inner-side cylinder 160. An outer diameter of the rod 230 is smaller than an inner diameter of the inner-side cylinder 160.

The inner tube 110, the outer-side cylinder 150, and the inner-side cylinder 160, one-end-side openings of which are fixed to the one-end-side attachment portion, extend toward the other end side such that the inner tube 110 extends longer than the outer-side cylinder 150 which extends longer than the inner-side cylinder 160.

The outer tube 210, the spring collar 310, and the rod 230, the other-end-side openings of which are fixed to the other-end-side attachment portion, extend toward the one end side such that the outer tube 210 extends longer than the rod 230 which extends longer than the spring collar 310.

In the telescopic device 2, a portion of one-end-side opening 111 of the inner tube 110, a portion of a one-end-side opening 151 of the outer-side cylinder 150, and a portion of a one-end-side opening 161 of the inner-side cylinder 160 are fixed to a one-end-side attachment hole 101 formed in the one-end-side attachment portion 100. A portion of the other-end-side opening 211 of the outer tube 210, a portion of the other-end-side opening 311 of the spring collar 310, and a portion of the other end side of the rod 230 are fixed to the other-end-side attachment portion 200.

In the telescopic device 2, a portion of the other-end-side opening 112 of the inner tube 110 is inserted into the outer tube 210 through a one-end-side opening 212 of the outer tube 210. A portion of a one-end-side opening 312 of the spring collar 310 is inserted into the inner tube 110 through the other-end-side opening 112 of the inner tube 110. A portion of the other-end-side opening 152 of the outer-side cylinder 150 and a portion of the other-end-side opening 162 of the inner-side cylinder 160 are inserted into the spring collar 310 through the one-end-side opening 312 of the spring collar 310. The piston 220 is provided near one end 232 of the rod 230 that is inserted into the inner-side cylinder 160 through the through-hole 143 formed in the rod guide 145 which is fixed to the inner side near the other-end-side opening 152 of the outer-side cylinder 150 and the inner side near the other-end-side opening 162 of the inner-side cylinder 160.

A spring 300 is disposed between one end of the spring collar 310 and the one-end-side attachment portion 100. Moreover, a rebound spring 235 is provided inside the inner-side cylinder 160 between the rod guide 145 and the piston 220. One end of the rebound spring 235 sits on the other end surface of the piston 220 and the other end of the rebound spring 235 sits on one end surface of the rod guide 145.

In the telescopic device 2, the outer tube 210, the inner tube 110, the spring collar 310, the outer-side cylinder 150, the inner-side cylinder 160, and the rod 230 are disposed so as to have the same axis as a central axis 2C of the inner-side cylinder 160 (that is, these members are disposed concentrically). The telescopic device 2 is configured to perform a compression operation of allowing the one-end-side attachment portion 100 and the other-end-side attachment portion 200 to move closer to each other and an extension operation of allowing the one-end-side attachment portion 100 and the other-end-side attachment portion 200 to move away from each other.

During the compression operation of the telescopic device 2, the spring collar 310 moves toward the one end side whereby the spring 300 is contracted to absorb the shock during the compression operation of the telescopic device 2.

During the extension operation of the telescopic device 2, the rebound spring 235 is contracted to absorb a shock during the extension operation of the telescopic device 2.

Oil 5 (hereinafter referred to simply as oil) is stored inside the outer tube 210 and the inner tube 110 (that is, inside the telescopic device 2). For example, as illustrated in FIG. 1, the oil is stored in such an amount that an oil level (top surface) 5t is positioned between the other-end-side opening 152 of the outer-side cylinder 150 and the other-end-side opening 112 of the inner tube 110 when the other-end-side attachment portion 200 of the telescopic device 2 is positioned on the upper side.

Thus, on one end side of the telescopic device 2, an inner-side cylinder-one-end-side oil storage chamber 51 in which the oil is stored is formed in a portion of an inner space of the inner-side cylinder 160 located closer to the other end side than the piston 220. Moreover, a one-end-side outer annular oil storage chamber 56 in which the oil is stored is formed in an annular space between an inner circumferential surface of the inner tube 110 and an outer circumferential surface of the outer-side cylinder 150.

Further, an annular cylinder-oil storage chamber 53 in which the oil is stored is formed in an annular space between an outer circumferential surface of the inner-side cylinder 160 and an inner circumferential surface of the outer-side cylinder 150.

Further, an inner-side-cylinder-other-end-side oil storage chamber 52 in which the oil is stored is formed in a space surrounded by the rod guide 145, the piston 220, an inner circumferential surface of the inner-side cylinder 160, and an outer circumferential surface of the rod 230.

Further, an annular spring-collar-inner-side oil storage chamber 54 in which oil is stored is formed in an annular space between the outer circumferential surface of the outer-side cylinder 150 and an inner circumferential surface of the spring collar 310. Further, an annular spring-collar-outer-side oil storage chamber 55 in which the oil is stored is formed in an annular space between the inner circumferential surface of the inner tube 110 and an outer circumferential surface of the spring collar 310. Further, the one-end-side-outer annular oil storage chamber 56, the annular spring-collar-outer-side oil storage chamber 55, and the annular spring-collar-inner-side oil storage chamber 54 are connected to each other.

The one-end-side outer annular oil storage chamber 56, the annular spring-collar-outer-side oil storage chamber 55, and the annular spring-collar-inner-side oil storage chamber 54 form an outer annular oil storage chamber positioned on an outer side of the outer circumferential surface of the outer-side cylinder 150.

Further, on an inner side of the telescopic device 2, a gas chamber 58 filled with gas such as air is formed in a closed space between the oil level 5t and the other-end-side attachment portion 200.

The one-end-side attachment portion 100 has a one-end-side attachment hole 101, a damping-force-generating-mechanism attachment hole 102, and a compensating device attachment hole 103 as attachment holes. The one-end-side attachment portion 100 includes first to fourth connection paths 131, 132, 133, and 134 as connection paths.

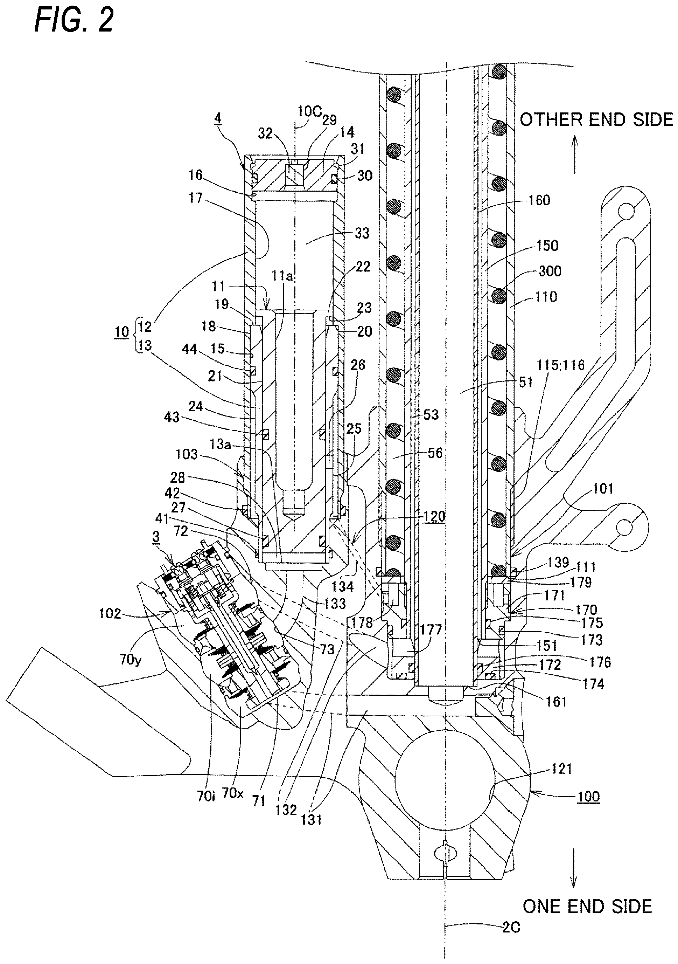

As illustrated in FIG. 2, the first connection path 131 is a connection path that allows a compression-side chamber 70x of the damping force generating device 3 and the inner-side-cylinder-one-end-side oil storage chamber 51 of the telescopic device 2 to be connected to each other.

The second connection path 132 is a connection path that allows an extension-side chamber 70y of the damping force generating device 3 and the annular cylinder-oil storage chamber 53 of the telescopic device 2 to be connected to each other.

The third connection path 133 is a connection path that allows an intermediate chamber 70i of the damping force generating device 3 and an oil-volume-variation-compensating oil storage chamber 28 formed in a portion of the compensating device 4 close to one end side of the cylinder 13 to be connected to each other.

The fourth connection path 134 is a connection path that functions as a one-end-side path of the oil discharge path 120, allowing the one-end-side-outer annular oil storage chamber 56 and a compensating-device-side path 25 of the oil discharge path 120 to be connected to each other.

A bottom holder 170 is fixed so as to be engaged with an outer circumferential surface near the one-end-side opening 151 of the outer-side cylinder 150 and an outer circumferential surface near the one-end-side opening 161 of the inner-side cylinder 160. The outer-side cylinder 150 and the inner-side cylinder 160 are disposed so that a portion of the one-end-side opening 161 of the inner-side cylinder 160 and a portion of the one-end-side opening 151 of the outer-side cylinder 150 protrude toward the one end side further than the one-end-side opening 111 of the inner tube 110 and the portion of the one-end-side opening 161 of the inner-side cylinder 160 protrudes toward the one end side further than the one-end-side opening 151 of the outer-side cylinder 150.

In a state in which one end surface of the bottom holder 170 fixed to the outer circumferential surface near the one-end-side opening 151 of the outer-side cylinder 150 and the outer circumferential surface near the one-end-side opening 161 of the inner-side cylinder 160 is in contact with a one-end-side bottom surface of the one-end-side attachment hole 101 and an outer circumferential surface of the bottom holder 170 is in contact with a one end side of an inner circumferential surface of the one-end-side attachment hole 101, a screw portion 115 formed on an outer circumferential surface near the one-end-side opening 111 of the inner tube 110 is screwed into a screw portion 116 formed on the inner circumferential surface of the one-end-side attachment hole 101. In this way, a portion of the one-end-side opening of the inner tube 110, a portion of the one-end-side opening of the outer-side cylinder 150, and a portion of the one-end-side opening 161 of the inner-side cylinder 160 are fixed to the one-end-side attachment hole 101.

An O-ring 139 is fitted into an O-ring fitting groove formed in the one end side of the inner circumferential surface of the one-end-side attachment hole 101, and the O-ring 139 makes close-contact with the outer circumferential surface of the inner tube 110. In this way, a space between the outer circumferential surface of the inner tube 110 and the inner circumferential surface of the one-end-side attachment hole 101 is maintained in a liquid-tight state (that is, a sealed state).

The bottom holder 170 includes a first cylindrical portion 171 having an approximately cylindrical form, a second cylindrical portion 172 having an approximately cylindrical form, formed so as to extend toward the one end side from the first cylindrical portion 171, an O-ring 173 that seals a space between an outer circumferential surface of the first cylindrical portion 171 and the inner circumferential surface of the one-end-side attachment hole 101, an O-ring 174 that seals a space between one end surface of the second cylindrical portion 172 and the one-end-side bottom surface of the one-end-side attachment hole 101, an O-ring 175 that seals a space between an inner circumferential surface of the first cylindrical portion 171 and the outer circumferential surface of the outer-side cylinder 150, and an O-ring 176 that seals a space between an inner circumferential surface of the second cylindrical portion 172 and the outer circumferential surface of the inner-side cylinder 160.

The O-rings 173 and 175 are fitted into O-ring fitting grooves formed in the first cylindrical portion 171, and the O-rings 174 and 176 are fitted into O-ring fitting grooves formed in the second cylindrical portion 172.

A connection path 178 is formed in the first cylindrical portion 171 to be connected to the one-end-side-outer annular oil storage chamber 56 and serves as a telescopic-device-side portion of the fourth connection path 134 that functions as a one-end-side path of the oil discharge path 120.

A connection path 177 is formed in the second cylindrical portion 172 to be connected to the annular cylinder-oil storage chamber 53 and serves as a telescopic-device-side portion of the second connection path 132.

Moreover, a washer 179 is disposed on the other end surface of the first cylindrical portion 171, and one end of the spring 300 disposed in the one-end-side-outer annular oil storage chamber 56 sits on the washer 179.

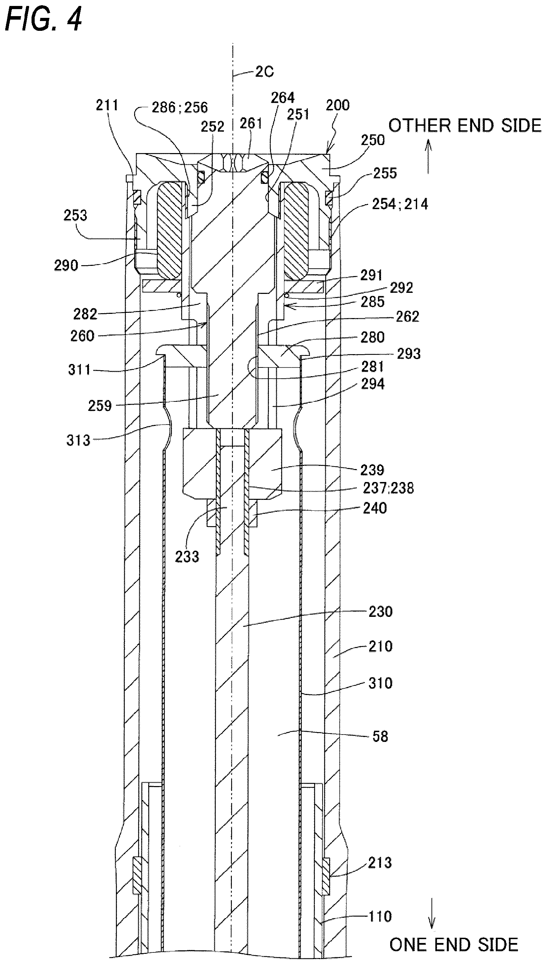

As illustrated in FIG. 4, the other-end-side attachment portion 200 includes a fork bolt 250, an adjuster 260 for adjusting the length of the spring 300, and an adjuster case 285 that rotatably stores the adjuster 260 and holds the other end of the rod 230.

The fork bolt 250 has a central through-hole 251 in which the other end of the adjuster 260 is inserted, an inner cylindrical portion 252 which is disposed on a central portion of one end surface and which uses the central through-hole 251 as the inner circumferential surface thereof, and an outer cylindrical portion 253 disposed on an outer circumferential edge side of one end surface.

A screw portion 254 formed on an outer circumferential surface of the outer cylindrical portion 253 of the fork bolt 250 is screwed into a screw portion 214 formed on an inner circumferential surface of the other end of the outer tube 210 whereby the fork bolt 250 is fixed to an inner side of the other-end-side opening 211 of the outer tube 210. Moreover, an O-ring 255 is fitted into an O-ring fitting groove formed in the outer circumferential surface of the outer cylindrical portion 253 of the fork bolt 250, and the space between the outer circumferential surface of the outer cylindrical portion 253 of the fork bolt 250 and the inner circumferential surface near the other-end-side opening 211 of the outer tube 210 is sealed by the O-ring 255.

The adjuster case 285 has a rod connecting portion 239 provided on one end side so as to connect the other end 233 of the rod 230, and a cylindrical adjuster storing portion 282 for rotatably storing the adjuster 260 is formed on the other end side thereof.

A screw portion 286 formed on an inner circumferential surface on the other end side of the adjuster case 285 is screwed on a screw portion 256 formed on an outer circumferential surface of the inner cylindrical portion 252 of the fork bolt 250 whereby the adjuster case 285 is fixed to one end surface of the fork bolt 250.

A cylindrical bump rubber 290 having a center at the central axis 2C is provided around an outer circumferential surface on the other end side of the adjuster case 285. Moreover, a washer 291 that receives one end surface of the bump rubber 290 is provided on the outer circumferential surface on the other end side of the adjuster case 285, and the washer 291 is fixed by a stopper ring 292.

The adjuster 260 is formed in a columnar form, an operating portion 261 is formed on the other end side thereof, and a holding portion 259 that holds a slider 280 to which the other end of the spring collar 310 is fixed so as to be movable along the central axis 2C is formed on one end side thereof. A screw portion 262 is formed on an outer circumferential surface of the holding portion 259.

The adjuster 260 is stored in the adjuster storing portion 282 of the adjuster case 285 so as to be rotatable about the central axis 2C.

An O-ring 264 is fitted into an O-ring fitting groove formed in the outer circumferential surface of the other end of the adjuster 260, and a space between an inner circumferential surface of the central through-hole 251 of the fork bolt 250 and an outer circumferential surface of the other end of the adjuster 260 is sealed by the O-ring 264.

The slider 280 is formed in a rectangular flat plate form, and has a central screw hole 281 formed at a center of the rectangular flat plate and a fixing portion 293 provided on one end surface of each of both ends in a longitudinal direction of the rectangular flat plate so as to fix the other end of the spring collar 310.

The slider 280 has a central screw hole 281 into which the screw portion 262 of the holding portion 259 of the adjuster 260 is screwed, and thus the slider 280 is attached to the holding portion 259 of the adjuster 260 so as to be movable along the central axis 2C when the adjuster 260 rotates about the central axis 2C.

A portion of the adjuster storing portion 282 of the adjuster case 285 facing the holding portion 259 of the adjuster 260 is formed in a through-hole 294 through which the slider 280 passes.

A screw portion 237 formed on an outer circumferential surface of the other end 233 of the rod 230 is screwed into a central screw hole 238 of the rod connecting portion 239 of the adjuster case 285, and a lock nut 240 is fastened to the screw portion 237. In this way, the other end 233 of the rod 230 is fixed to the rod connecting portion 239.

Moreover, the other end of the spring collar 310 is fixed to the fixing portion 293 of the slider 280, and the other end of the spring 300 sits on a ring-shaped spring support 320 provided in one end of the spring collar 310.

A gap 321 is formed between an outer circumferential surface of the spring support 320 and the inner circumferential surface of the inner tube 110, and a gap 322 is formed between an inner circumferential surface of the spring support 320 and an outer circumferential surface of the outer-side cylinder 150. Thus, the oil can flow between the one-end-side outer annular oil storage chamber 56 and the annular spring-collar-outer-side oil storage chamber 55 through the gap 321, and between the one-end-side outer annular oil storage chamber 56 and the annular spring-collar-inner-side oil storage chamber 54 through the gap 322.

A connection hole 313 that connects an inner side and an outer side of the spring collar 310 is formed in a wall surface on the other end side of the spring collar 310.

Thus, when the operating portion 261 of the adjuster 260 is operated so that the adjuster 260 rotates and the slider 280 moves along the central axis 2C, the spring collar 310 also moves in a direction along the central axis 2C. Due to such a configuration, by rotating the adjuster 260, it is possible to adjust the length of the spring 300, thereby adjusting an initial set load of the spring 300.

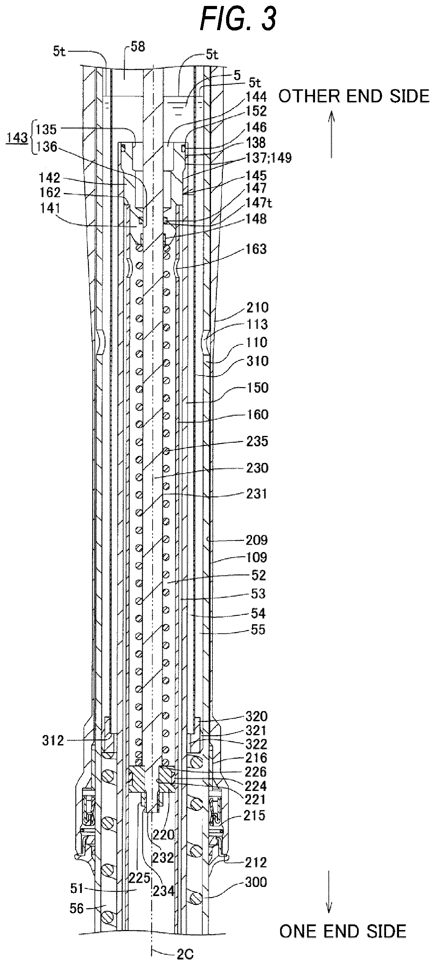

As illustrated in FIG. 3, the rod guide 145 is provided near the other-end-side opening 152 of the outer-side cylinder 150 and the other-end-side opening 162 of the inner-side cylinder 160.

The rod guide 145 is configured as a stepped columnar body (that is, a small-diameter portion 141 is formed on one end side thereof and a large-diameter portion 142 is formed on the other end side) formed such that an outer circumferential diameter on one end side thereof has such a size that the rod guide 145 is inserted into the inner circumferential surface close to the other-end-side opening 162 of the inner-side cylinder 160 and an outer circumferential diameter on the other end side has such a size that the rod guide 145 is inserted into the inner circumferential surface close to the other-end-side opening 152 of the outer-side cylinder 150. The stepped columnar body has a through-hole 143 which extends along a central axis of the columnar body and of which a central axis is on the central axis of the columnar body.

A screw portion 137 is formed on an outer circumferential surface 138 of the large-diameter portion 142 of the rod guide 145, and an annular fitting groove for fitting an O-ring 146 as a gasket is formed on the other end side of the outer circumferential surface 138 of the large-diameter portion 142.

The through-hole 143 includes a tool insertion hole 135 formed as a hole of which a central axis is on a central axis of the large-diameter portion 142 and a bearing hole 136 formed as a hole of which a central axis is on a central axis of the small-diameter portion 141. Since the rod guide 145 has such a tool insertion hole 135, the rod guide 145 can be attached and detached easily.

An annular fitting groove for fitting a bush 148 is formed in a one-end-side inner circumferential surface of the bearing hole 136, and an annular fitting groove for fitting a lip packing 147 as a second packing is formed in an inner circumferential surface closer to the other end side than the annular fitting groove for fitting the bush 148.

When a tool (not illustrated) is inserted into the tool insertion hole 135 to rotate the rod guide 145 so that a screw portion of the rod guide 145 in which the O-ring 146 is fitted into an annular fitting groove, the lip packing 147 is fitted into an annular fitting groove, and the bush 148 is fitted into an annular fitting groove is screwed into a screw portion 149 formed on an inner circumferential surface close to the other-end-side opening of the outer-side cylinder 150, a one-end-side outer circumferential surface of the rod guide 145 makes close-contact with the inner circumferential surface of the inner-side cylinder 160 and the rod guide 145 is attached to an inner side near the other-end-side opening of the inner-side cylinder 160 and an inner side near the other-end-side opening of the outer-side cylinder 150. The screw portions 137 and 149 form a rod guide attachment portion for attaching the rod guide 145 to the inner side near the other-end-side opening of the inner-side cylinder 160 and the inner side near the other-end-side opening of the outer-side cylinder 150.

That is, the rod guide 145 is formed as an annular columnar body having an outer circumferential surface 138 engaged with the inner circumferential surface near the other-end-side opening 152 of the outer-side cylinder 150 and the inner circumferential surface near the other-end-side opening 162 of the inner-side cylinder 160 and a through-hole 143 for allowing the rod 230 to pass therethrough. The rod guide 145 is attached to the inner circumferential surface near the other-end-side opening 152 of the outer-side cylinder 150 and the inner circumferential surface near the other-end-side opening 162 of the inner-side cylinder 160 by the rod guide attachment portion so that a space between the outer circumferential surface 138 and the inner circumferential surface near the other-end-side opening 152 of the outer-side cylinder 150 is sealed by the O-ring 146 as a gasket that is fitted into the annular fitting groove formed in the outer circumferential surface 138, and a space between an inner circumferential surface of the through-hole 143 and an outer circumferential surface of the rod 230 is sealed by the lip packing 147 as a second packing that is fitted into the annular fitting groove formed in the inner circumferential surface of the through-hole 143.

Moreover, a connection hole 163 is formed in a wall surface close to the other-end-side opening 162 of the inner-side cylinder 160 to be connected to the inner-side-cylinder-other-end-side oil storage chamber 52 formed by the space surrounded by the rod guide 145, the piston 220, and the inner circumferential surface of the inner-side cylinder 160 and the annular cylinder-oil storage chamber 53 formed by the space between the outer circumferential surface of the inner-side cylinder 160 and the inner circumferential surface of the outer-side cylinder 150.

The rod 230 has both ends and a rod portion 231 other than both ends, the one end 232 has a smaller diameter than a diameter of the rod portion 231, a screw portion 234 is formed on an outer circumferential surface on one end side of one end 232, and a screw portion 237 is formed on an outer circumferential surface on the other end side of the other end 233. The rod 230 is configured such that the screw portion 237 of the other end 233 is fixed by being screwed into the central screw hole 238 of the rod connecting portion 239 formed in the other-end-side attachment portion 200 as described above and is inserted into the inner-side cylinder 160 through the through-hole 143 of the rod guide 145 from one end side, an outer circumferential surface of the rod portion 231 and the inner circumferential surface of the through-hole 143 are sealed by the lip packing 147, and the outer circumferential surface of the rod portion 231 and the inner circumferential surface of the through-hole 143 can slide in relation to each other in a liquid-tight state.

The lip packing 147 is fitted into the annular fitting groove so that a tip end 147t of a lip of the lip packing 147 faces one end side. Thus, a space between an inner circumferential surface of the tool insertion hole 135 and the outer circumferential surface of the rod 230 forms an oil storage chamber 144.

In the embodiment, the lip packing 147 is fitted into the annular fitting groove so that the tip end 147t of the lip of the lip packing 147 faces one end side. Thus, when the rod 230 moves toward one end side during the compression operation, there is a possibility that oil adhering to the outer circumferential surface of the rod 230 flows into the inner-side-cylinder-other-end-side oil storage chamber 52 which is on the inner side of the inner-side cylinder 160 and oil stored in the oil storage chamber 144 is pressurized by an increased internal pressure of the gas chamber 58 on the other end side during the compression operation and flows into the inner side of the inner-side cylinder 160.

The space between the inner circumferential surface of the tool insertion hole 135 and the outer circumferential surface of the rod 230 is formed as the oil storage chamber 144. Thus, even if oil is likely to flow from the oil storage chamber 144 into the inner-side-cylinder-other-end-side oil storage chamber 52, the oil is caused to return to the outside of the outer-side cylinder 150 through the compensating device 4 as will be described later. Therefore, it is possible to prevent an internal pressure of oil in the suspension device 1 from increasing with time.

The piston 220 is fixed near one end of the rod 230 positioned on the inner side of the inner-side cylinder 160.

The piston 220 is configured as a columnar body that includes a through-hole 221 which extends along a central axis of the columnar body and of which a central axis is on the central axis of the columnar body, an annular fitting groove for fitting a piston ring 224 is formed in the outer circumferential surface, and the piston ring 224 is fitted into the annular fitting groove.

The one end 232 of the rod 230 having a small diameter is inserted so as to pass through the through-hole 221 of the piston 220, a nut 225 engages with a screw portion on one end side of the one end 232, and the nut 225 is fastened so that the other end surface of the piston 220 makes press-contact with a step surface 226 between a small-diameter portion of the rod 230 and the rod portion 231. In this way, the piston 220 is fixed to the one end 232 of the rod 230. An outer circumferential surface of the piston ring 224 and the inner circumferential surface of the inner-side cylinder 160 can slide in relation to each other in a liquid-tight state, and thus the inner space of the inner-side cylinder 160 is partitioned in a liquid-tight state by the piston 220.

An oil seal 215 as a first packing that maintains a liquid-tight state between an outer circumferential surface 109 of the inner tube 110 and an inner circumferential surface 209 of the outer tube 210 is fitted into an inner side near the one-end-side opening 212 of the outer tube 210.

Moreover, to facilitate sliding of the outer circumferential surface 109 of the inner tube 110 in relation to the inner circumferential surface 209 of the outer tube 210, a guide bush 216 is fitted into the inner side near the one-end-side opening 212 of the outer tube 210, and a guide bush 213 is fitted into an inner side of a portion closer to the other end side than an intermediate portion of the outer tube 210.

Further, a connection hole 113 is formed in a wall surface of the inner tube 110 so as to connect an inner side and an outer side of the inner tube 110 such that an oil film is formed so that oil flows into a space between the outer circumferential surface 109 of the inner tube 110 and the inner circumferential surface 209 of the outer tube 210 through the connection hole 113 to smooth the sliding of the outer circumferential surface 109 of the inner tube 110 in relation to the inner circumferential surface 209 of the outer tube 210.

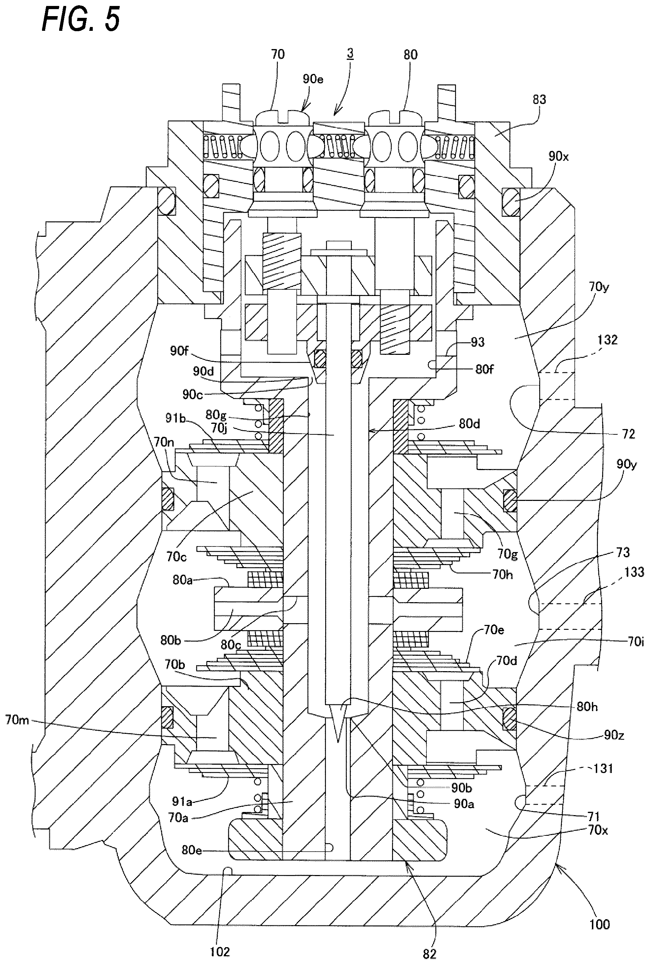

As illustrated in FIG. 5, the damping force generating device 3 is configured such that a damping force generating mechanism 82 is attached to a damping-force-generating-mechanism attachment hole 102 formed in the one-end-side attachment portion 100.

The damping force generating device 3 applies damping force to the oil flowing from the first connection path 131 into the compression-side chamber 70x so as to flow to the second and third connection paths 132 and 133 during the compression operation of the telescopic device 2 and applies the damping force to the oil flowing from the second and third connection paths 132 and 133 into the extension-side chamber 70y so as to flow to the first connection path 131 during the extension operation of the telescopic device 2 to thereby generate damping force during the compression and extension operations of the telescopic device 2.

The damping force generating mechanism 82 of the damping force generating device 3 includes a central cylindrical body 70a, a lid 83 provided on one end side of the central cylindrical body 70a and having an adjustment mechanism 90e, and disc-shaped partition plates (pistons) 70b and 70c fixed at intervals to an outer circumference on the other end side of the central cylindrical body 70a.

The damping force generating mechanism 82 is attached to the damping-force-generating-mechanism attachment hole 102 so that the other end side of the central cylindrical body 70a is positioned on a hole-bottom side of the damping-force-generating-mechanism attachment hole 102 and an opening of the damping-force-generating-mechanism attachment hole 102 is blocked by the lid 83. In this way, the damping force generating device 3 is formed.

The damping force generating device 3 includes the extension-side chamber 70y partitioned by the lid 83 and the partition plate 70c and formed by a hole space between the lid 83 and the partition plate 70c, an intermediate chamber 70i partitioned by the partition plate 70b and the partition plate 70c and formed by a hole space between the partition plate 70b and the partition plate 70c, the compression-side chamber 70x partitioned by the partition plate 70b and formed by a hole space between the partition plate 70b and a hole bottom, a compression-side damping valve 70e attached to an intermediate-chamber-70i side of the partition plate 70b so as to block a through-hole 70d formed in the partition plate 70b, an extension-side damping valve 70h attached to an intermediate-chamber-70i side of the partition plate 70c so as to block a through-hole 70g formed in the partition plate 70c, and a needle valve 70j positioned along a central axis of the central cylindrical body 70a.

An O-ring 90x is provided on an outer circumferential surface of the lid 83 that blocks the damping-force-generating-mechanism attachment hole 102 and has the adjustment mechanism 90e. Thus, a liquid-tight state between the outer circumferential surface of the lid 83 and an inner circumferential surface of the damping-force-generating-mechanism attachment hole 102 is maintained, and the damping-force-generating-mechanism attachment hole 102 is formed in a liquid-tight state. Moreover, an O-ring 90y is provided on an outer circumferential surface of the partition plate 70c. Thus, a liquid-tight state between the outer circumferential surface of the partition plate 70c and the inner circumferential surface of the damping-force-generating-mechanism attachment hole 102 is maintained, and the extension-side chamber 70y is maintained in a liquid-tight state by the O-rings 90x and 90y. Further, an O-ring 90z is provided on an outer circumferential surface of the partition plate 70b. Thus, a liquid-tight state between the outer circumferential surface of the partition plate 70b and the inner circumferential surface of the damping-force-generating-mechanism attachment hole 102 is maintained, the intermediate chamber 70i is maintained in a liquid-tight state by the O-ring 90y and the O-ring 90z, and the compression-side chamber 70x is maintained in a liquid-tight state by the O-ring 90z.

A disc-shaped ring member 80a is provided between the compression-side damping valve 70e and the extension-side damping valve 70h. A plurality of through-holes 80b that passes in a radial direction so as to extend from the inner circumference to the outer circumference is formed in a radial form in a central portion in the thickness direction of the ring member 80a. Moreover, through-holes 80c that pass in the radial direction through the central cylindrical body 70a are formed in the central cylindrical body 70a so as to correspond to the through-holes 80b. A central hole 80d of the central cylindrical body 70a is formed as a three-diameter hole in which a small-diameter hole 80e is formed close to the compression-side chamber 70x, a large-diameter hole 80f is formed on a side opposite to the small-diameter hole 80e, and a medium-diameter hole 80g is formed between the small-diameter hole 80e and the large-diameter hole 80f. A gap 90a is formed between a boundary angle 90b between the small-diameter hole 80e and the medium-diameter hole 80g and a taper 80h at a tip end of the needle valve 70j. Moreover, a gap 90c is formed between a boundary angle 90d between the large-diameter hole 80f and the medium-diameter hole 80g and a taper of a taper member 90f formed close to a base of the needle valve 70j.

The needle valve 70j is finely adjusted by the adjustment mechanism 90e that includes an extension-side adjuster 80 and a compression-side adjuster 70. A check valve 91a blocks a through-hole 70m formed in the partition plate 70b from the compression-side chamber 70x, and a check valve 91b blocks a through-hole 70n formed in the partition plate 70c from the extension-side chamber 70y. The compression-side damping valve 70e, the extension-side damping valve 70h, and the check valves 91a and 91b are constituted as a layer by stacking a plurality of elastic thin plates.

That is, the damping force generating device 3 is attached to the one-end-side attachment portion 100 and includes a first entrance port 71 that is connected to the inner-side-cylinder-one-end-side oil storage chamber 51 through the first connection path 131 formed in the one-end-side attachment portion 100, a second entrance port 72 that is connected to the annular cylinder-oil storage chamber 53 through the second connection path 132 formed in the one-end-side attachment portion 100, a third entrance port 73 that is connected to the oil-volume-variation-compensating oil storage chamber 28 of the compensating device 4 through the third connection path 133, and a compression-operation passage and an extension-operation passage that generate damping force using a passage resistance when oil passes. During the compression operation, the damping force generating device 3 generates damping force using a passage resistance when oil which is pressurized by the piston 220 to flow from the inner-side-cylinder-one-end-side oil storage chamber 51 into the compression-side chamber 70x through the first entrance port 71 passes through the compression-operation passage and then allows the oil to flow into the annular cylinder-oil storage chamber 53 through the second entrance port 72. During the extension operation, the damping force generating device 3 generates damping force using a passage resistance when oil which is pressurized by the piston 220 to flow from the inner-side-cylinder-other-end-side oil storage chamber 52 into the extension-side chamber 70y through the second entrance port 72 after passing through the connection hole 163 and the annular cylinder-oil storage chamber 53 passes through the extension-operation passage and then allows the oil to flow into the inner-side-cylinder-one-end-side oil storage chamber 51 through the first entrance port 71.

As illustrated in FIG. 2, the compensating device 4 includes a cylindrical cylinder 10 and a free piston 11 provided in the cylinder 10 so as to be movable along a central axis 10C of the cylinder 10.

The cylinder 10 includes a cylindrical outer cylinder 12 and a cylindrical inner cylinder 13.

A portion of one-end-side opening of the outer cylinder 12 and a portion of a one-end-side opening 13a of the inner cylinder 13 are attached to the compensating device attachment hole 103 formed in the one-end-side attachment portion 100, and the other-end-side opening of the outer cylinder 12 is blocked by a lid 14 in an air-tight state.

An inner diameter of a one-end-side inner circumferential portion 15 between a central portion in an extension direction and the one-end-side opening of the outer cylinder 12 and an inner diameter of a near-the-other-end-side inner circumferential portion 16 near the other-end-side opening in the extension direction of the outer cylinder 12 are larger than an inner diameter of an other-end-side inner circumferential portion 17 disposed between the one-end-side inner circumferential portion 15 and the near-the-other-end-side inner circumferential portion 16.

Moreover, a other-end-side outer circumferential portion 18 of the inner cylinder 13 and the one-end-side inner circumferential portion 15 of the outer cylinder 12 have such outer and inner diameters that the other-end-side outer circumferential portion 18 is fitted into the one-end-side inner circumferential portion 15. Further, a portion of one-end-side opening of the outer cylinder 12 and a portion of the one-end-side opening 13a of the inner cylinder 13 are attached to the compensating device attachment hole 103 in a state in which a other-end-side-opening end surface 19 of the inner cylinder 13 makes contact with a step surface 20 between the one-end-side inner circumferential portion 15 and the other-end-side inner circumferential portion 17 of the outer cylinder 12, the outer circumferential surface of the other-end-side outer circumferential portion 18 of the inner cylinder 13 is fitted into an inner circumferential surface of the one-end-side inner circumferential portion 15 of the outer cylinder 12, and the portion of the one-end-side opening 13a of the inner cylinder 13 protrudes toward one end side further than the one-end-side opening of the outer cylinder 12.

The free piston 11 is formed as a hollow columnar body having one closed end and the other open end, in which a central hole 11a extending from a central portion of an other end surface of the column toward one end surface is formed.

The free piston 11 is formed in such dimensions that an outer circumferential surface 21 excluding a near-the-other-end-side portion and an inner circumferential surface of the inner cylinder 13 have such outer and inner diameters that the outer circumferential surface 21 is fitted into the inner circumferential surface of the inner cylinder 13. A flange portion 22 having an outer circumferential surface having a larger diameter than the outer diameter of the outer circumferential surface excluding the near-the-other-end-side portion is formed in the near-the-other-end-side portion. The outer circumferential surface of the flange portion 22 and the inner circumferential surface of the other-end-side inner circumferential portion 17 of the outer cylinder 12 have such outer and inner diameters that the outer circumferential surface of the flange portion 22 is fitted into the inner circumferential surface of the other-end-side inner circumferential portion 17 of the outer cylinder 12. Movement of the free piston 11 toward the one end side is limited by a feature wherein a step surface 23 between the outer circumferential surface of the flange portion 22 and the outer circumferential surface 21 excluding the near-the-other-end-side portion brings into contact with the other-end-side-opening end surface 19 of the inner cylinder 13 protruding toward the inner side further than the inner circumferential surface of the other-end-side inner circumferential portion 17 of the outer cylinder 12.

An annular space formed between the inner circumferential surface of the one-end-side inner circumferential portion 15 of the outer cylinder 12 and the outer circumferential surface 24 close to the one-end-side opening of the inner cylinder 13 forms a compensating-device-side path 25 of the oil discharge path 120.

That is, the oil discharge path 120 includes the compensating-device-side path 25 and the fourth connection path 134 that forms a one-end-side path of the oil discharge path 120.

An oil discharge port 26 is formed in a wall surface on the one end side of the inner cylinder 13 so as to pass through the inner side of the inner cylinder 13 and the compensating-device-side path 25.

A packing 27, for example, as an annular sealing member that seals the space between the inner circumferential surface of the inner cylinder 13 and the outer circumferential surface on one end side of the free piston 11 and that functions as an opening/closing control mechanism to open and close the oil discharge port 26 is fitted into an annular fitting groove formed in the outer circumferential surface of the packing 27.

The packing 27 operates to block connection between the oil discharge port 26 and the oil-volume-variation-compensating oil storage chamber 28 formed on one end side of the inner cylinder 13 when the packing 27 is positioned closer to one end side than the oil discharge port 26. The packing 27 also operates to allow the connection between the oil discharge port 26 and the oil-volume-variation-compensating oil storage chamber 28 when the packing 27 is positioned closer to the other end side than the oil discharge port 26 (that is, when an amount of oil in the oil-volume-variation-compensating oil storage chamber 28 exceeds a predetermined amount).

The lid 14 is a disc-shaped member having a gas filling hole 29 formed at a center of the disc. An outer circumferential surface of the lid 14 is fitted into an inner circumferential surface of the near-the-other-end-side inner circumferential portion 16 of the outer cylinder 12. A space between the outer circumferential surface of the lid 14 and the inner circumferential surface of the near-the-other-end-side inner circumferential portion 16 is sealed by an O-ring 30 fitted into an annular fitting groove formed in the outer circumferential surface of the lid 14. Removal of the near-the-other-end-side inner circumferential portion 16 from the inner circumferential surface is suppressed by a stopper ring 31. Moreover, a sealing member 32 is fitted into an inner side of the gas filling hole, whereby a gas chamber 33 partitioned by the lid 14, the outer cylinder 12, and the free piston 11 is formed.

After gas is filled into the gas chamber 33 via a sealing member 32 with a gas injecting device (not illustrated), the gas filled in the gas chamber 33 is hermetically sealed by the sealing member 32.

Moreover, a space between the one-end-side inner circumferential surface of the inner cylinder 13 and an outer circumferential surface of the free piston 11 is sealed by an O-ring 41 fitted into an annular fitting groove that is formed in the outer circumferential surface of the free piston 11. A space between the one-end-side outer circumferential surface of the outer cylinder 12 and a wall of the compensating device attachment hole 103 is sealed by an O-ring 42 fitted into an annular fitting groove that is formed in the inner circumferential surface of the compensating device attachment hole 103.

Moreover, a space between the outer circumferential surface of the free piston 11 and the inner circumferential surface of the inner cylinder 13 is sealed by a packing 43 fitted into an annular fitting groove that is formed in the outer circumferential surface on a central side in the extension direction of the free piston 11. As a result, connection between the gas chamber 33 and the oil discharge port 26 is blocked.

Further, a space between an outer circumferential surface on the other end side of the inner cylinder 13 and the inner circumferential surface of the outer cylinder 12 is sealed by an O-ring 44 fitted into an annular fitting groove that is formed in the outer circumferential surface on the other end side of the inner cylinder 13. As a result, connection between the gas chamber 33 and the compensating-device-side path 25 is blocked.

An axle attachment hole 121 of the one-end-side attachment portion 100 of the suspension device 1 having the above-described configuration is attached to an axle of the front wheel of a motorcycle (not illustrated), for example, and the other-end-side attachment portion 200 is attached to a vehicle body frame of the motorcycle (not illustrated), for example. In this way, the front fork of the motorcycle is formed.

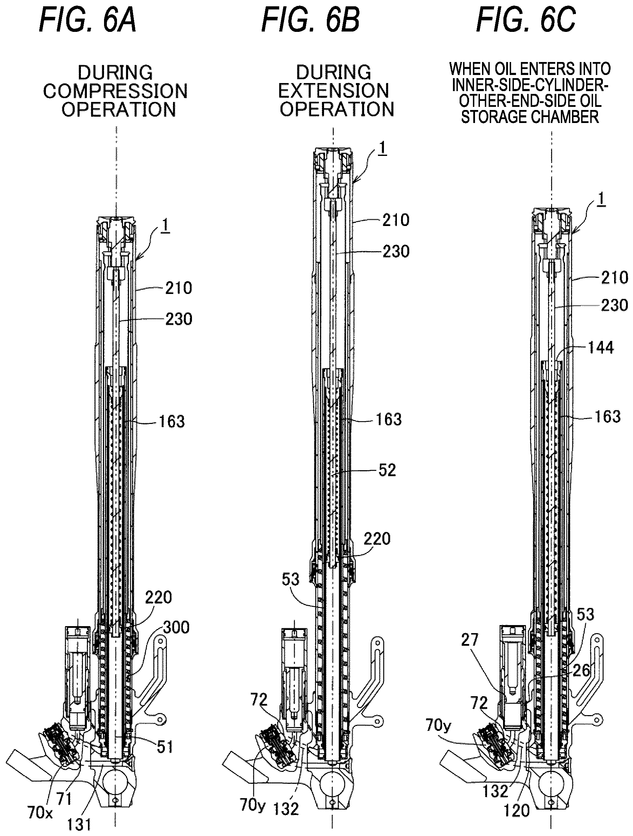

During the compression operation of the front fork, as illustrated in FIG. 6A, the outer tube 210 moves downward in relation to the inner tube 110. When the outer tube 210 moves downward, since the spring collar 310 also moves downward, the spring 300 is compressed and the rod 230 and the piston 220 provided near one end of the rod 230 also move downward. Thus, pressure of oil in the inner-side-cylinder-one-end-side oil storage chamber 51 increases, and the oil flows from the inner-side-cylinder-one-end-side oil storage chamber 51 into the compression-side chamber 70x through the first connection path 131 and the first entrance port 71.

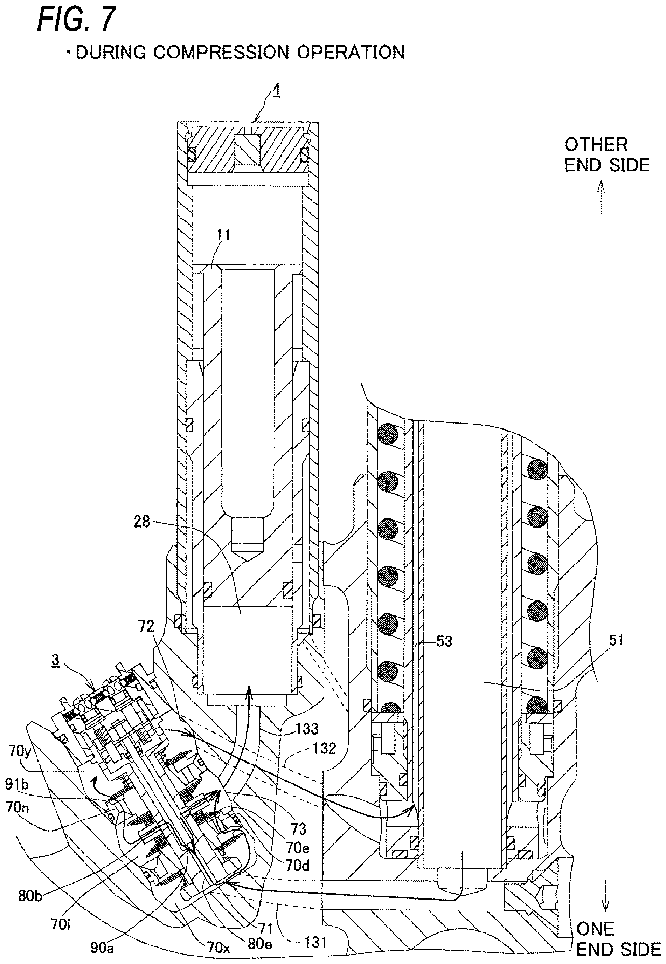

As indicated by an arrow in FIG. 7, the oil flowing into the compression-side chamber 70x flows into the through-hole 70d to push and open the compression-side damping valve 70e and flows into the intermediate chamber 70i. Damping force is generated by resistance of the compression-side damping valve 70e blocking a flow of the oil. That is, a compression-operation passage that generates the damping force using passage resistance when the oil passes is formed by a passage that extends through the compression-side damping valve 70e.

Meanwhile, the oil flowing into the compression-side chamber 70x also flows into the small-diameter hole 80e and then flows into the intermediate chamber 70i through the gap 90a and the through-hole 80b.

The oil flowing into the intermediate chamber 70i through the through-hole 70d and the oil flowing into the intermediate chamber 70i through the through-hole 80b join, and oil joined at the intermediate chamber 70i diverges into a flow of oil flowing toward the through-hole 70n and a flow of oil flowing toward the third connection path 133.

Moreover, the oil flowing into the through-hole 70n pushes and opens the check valve 91b to flow into the extension-side chamber 70y, flows into the second connection path 132 through the second entrance port 72, and flows into the inner-side-cylinder-other-end-side oil storage chamber 52 through the annular cylinder-oil storage chamber 53 and the connection hole 163.

Further, the oil flowing into the third connection path 133 flows into the oil-volume-variation-compensating oil storage chamber 28 of the compensating device 4, and the free piston 11 moves toward the other end side by pressure of the oil.

During the extension operation of the front fork, the spring 300 compressed during the compression operation restores its original length, whereby as illustrated in FIG. 6B, the outer tube 210 moves upward in relation to the inner tube 110. In this case, the rod 230 also moves upward together with the outer tube 210, and the piston 220 also moves upward. As a result, the pressure of the oil in the inner-side-cylinder-other-end-side oil storage chamber 52 increases, and the oil in the inner-side-cylinder-other-end-side oil storage chamber 52 flows into the extension-side chamber 70y through the connection hole 163, the annular cylinder-oil storage chamber 53, the second connection path 132, and the second entrance port 72.

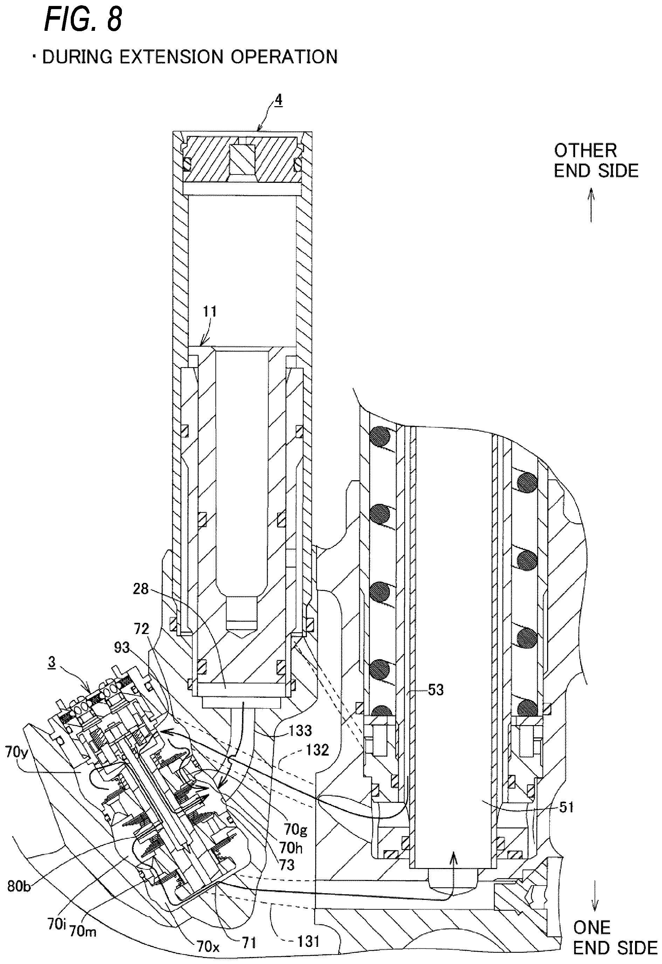

As indicated by an arrow in FIG. 8, the oil flowing into the extension-side chamber 70y flows into the through-hole 70g to push and open the extension-side damping valve 70h to flow into the intermediate chamber 70i. Damping force is generated by the resistance of the extension-side damping valve 70h blocking the flow of the oil. That is, an extension-operation passage that generates the damping force using the passage resistance when the oil passes is formed by a passage that extends through the extension-side damping valve 70h.

Moreover, the oil flowing into the extension-side chamber 70y flows into the intermediate chamber 70i through the hole 93 and the through-hole 80b.

The oil flowing into the intermediate chamber 70i through the through-hole 70g, the oil flowing into the intermediate chamber 70i through the through-hole 80b, and the oil flowing from the oil-volume-variation-compensating oil storage chamber 28 of the compensating device 4 into the intermediate chamber 70i through the third connection path 133 join, and the joined oil flows from the intermediate chamber 70i into the through-hole 70m to push and open the check valve 91a to flow into the compression-side chamber 70x. The oil flowing into the compression-side chamber 70x flows into the inner-side-cylinder-one-end-side oil storage chamber 51 through the first entrance port 71 and the first connection path 131.

As illustrated in FIG. 6C, when the oil adhering to the outer circumferential surface of the rod 230 enters into the inner-side-cylinder-other-end-side oil storage chamber 52 during the compression operation and when the oil stored in the oil storage chamber 144 enters into the inner-side-cylinder-other-end-side oil storage chamber 52 from the oil storage chamber 144 by the pressure generated during the compression operation (that is, when the oil enters into the inner-side-cylinder-other-end-side oil storage chamber 52 from the oil storage chamber 144), the oil passes from the inner-side-cylinder-other-end-side oil storage chamber 52 into the connection hole 163 and flows into the extension-side chamber 70y through the annular cylinder-oil storage chamber 53, the second connection path 132, and the second entrance port 72.

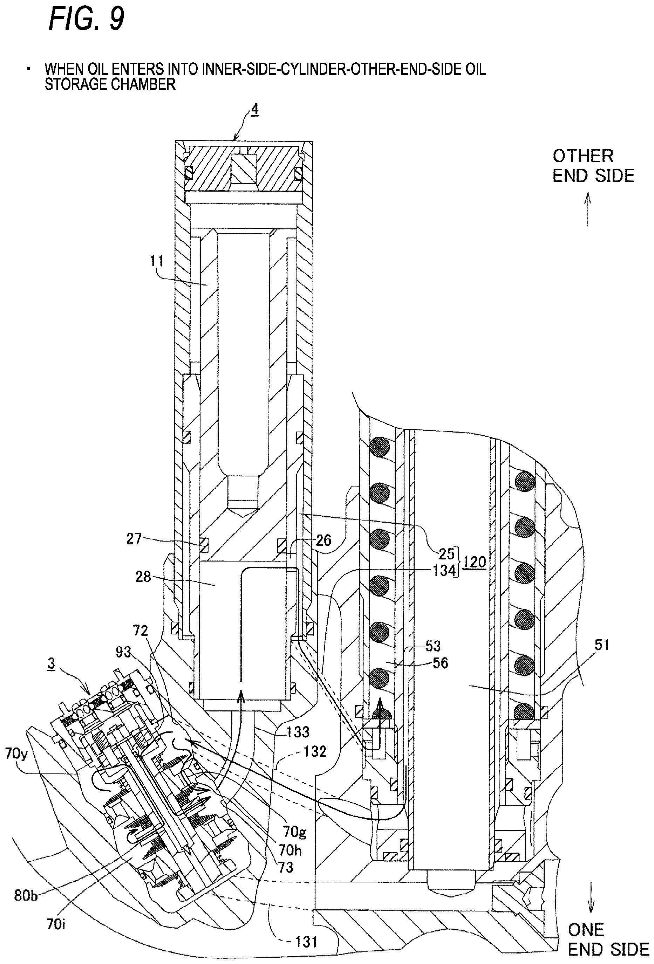

As indicated by an arrow in FIG. 9, the oil flowing into the extension-side chamber 70y flows into the through-hole 70g to push and open the extension-side damping valve 70h to flow into the intermediate chamber 70i and also flows into the intermediate chamber 70i through the hole 93 and the through-hole 80b.

The oil flowing into the intermediate chamber 70i through the through-hole 70g and the oil flowing into the intermediate chamber 70i through the through-hole 80b join, and the joined oil flows toward the oil-volume-variation-compensating oil storage chamber 28 through the third entrance port 73 and the third connection path 133.

When the free piston 11 moves toward the other end side by the pressure of the oil flowing toward the oil-volume-variation-compensating oil storage chamber 28 and the amount of the oil in the oil-volume-variation-compensating oil storage chamber 28 exceeds a predetermined amount so that the packing 27 as an opening/closing control mechanism provided on the one-end-side outer circumferential surface of the free piston 11 is positioned closer to the other end side than the oil discharge port 26, the oil discharge port 26 and the oil-volume-variation-compensating oil storage chamber 28 are connected to each other. Thus, the oil in the oil-volume-variation-compensating oil storage chamber 28 passes through the oil discharge port 26 and returns to the annular spring-collar-outer-side oil storage chamber 55 and the annular spring-collar-inner-side oil storage chamber 54 through the one-end-side-outer annular oil storage chamber 56 after passing through the oil discharge path 120 (the compensating-device-side path 25 of the oil discharge path 120 and the fourth connection path 134 functioning as a one-end-side path of the oil discharge path 120).

Therefore, it is possible to prevent the internal pressure of the oil in the suspension device 1 from increasing with time and to prevent excessively large pressure from being applied to portions such as the adjusters (the extension-side adjuster 70 and the compression-side adjuster 80) of the damping force generating device 3 and an attachment portion of the rod guide 145.

Further, even when the oil in the inner-side-cylinder-other-end-side oil storage chamber 52 and the annular cylinder-oil storage chamber 53 expands due to heat, the free piston 11 moves toward the other end side by the pressure of the oil flowing toward the oil-volume-variation-compensating oil storage chamber 28. Thus, when the amount of the oil in the oil-volume-variation-compensating oil storage chamber 28 exceeds a predetermined amount so that the packing 27 as an opening/closing control mechanism provided on the one-end-side outer circumferential surface of the free piston 11 is positioned closer to the other end side than the oil discharge port 26, the oil discharge port 26 and the oil-volume-variation-compensating oil storage chamber 28 are connected to each other. Thus, the oil in the oil-volume-variation-compensating oil storage chamber 28 passes through the oil discharge port 26 and returns to the annular spring-collar-outer-side oil storage chamber 55 and the annular spring-collar-inner-side oil storage chamber 54 through the one-end-side-outer annular oil storage chamber 56 after passing through the oil discharge path 120.

In this case, it is possible to prevent the internal pressure of the oil in the suspension device 1 from increasing with time and to prevent excessively large pressure from being applied to the portions such as the adjusters of the damping force generating device 3 and the attachment portion of the rod guide 145.

According to the suspension device 1 of the embodiment, it is possible to prevent the internal pressure of the oil in the suspension device 1 from increasing with time and to prevent excessively large pressure from being applied to a portion such portions such as the adjusters of the damping force generating device 3 and the attachment portion of the rod guide 145. Therefore, it is possible to provide a maintenance-free suspension device 1 which can be used for a longer travel distance without requiring a disassembling inspection for decreasing an internal pressure of oil in the suspension device 1 whenever a travel distance of a vehicle having the suspension device 1 attached thereto reaches a predetermined distance.

## Claims

1. A suspension device (1) comprising a telescopic device (2), a damping force generating device (3), and a compensating device (4),
the telescopic device (2) including:
a cylindrical outer tube (210), one end of which is open and the other end of which is attached to the other-end-side attachment portion (200);
a cylindrical inner tube (110), one end side of which is attached to a one-end-side attachment portion (100), and the other-end-side opening of which is inserted into the outer tube (210) through a one-end-side opening of the outer tube (210);
a first packing (215) provided on an inner side near the one-end-side opening of the outer tube (210) so as to seal an outer circumferential surface of the inner tube (110);
a cylindrical outer-side cylinder (150) which is disposed on an inner side of the inner tube (110), and the one end side of which is attached to the one-end-side attachment portion (100);
a cylindrical inner-side cylinder (160) which is disposed on an inner side of the outer-side cylinder (150), and the one end side of which is attached to the one-end-side attachment portion (100);
a rod (230), the other end side of which is attached to the other-end-side attachment portion (200), and the one end side of which is inserted into the inner-side cylinder (160) through the other-end-side opening of the inner-side cylinder (160);
a rod guide (145) which is formed of an annular columnar body having a through-hole (143) for allowing the rod (230) to pass therethrough, and in which an outer circumferential surface is engaged with an inner circumferential surface near the other-end-side opening of the outer-side cylinder (150) and an inner circumferential surface near the other-end-side opening of the inner-side cylinder (160), whereby a space between the outer circumferential surface of the rod guide (145) and the inner circumferential surface near the other-end-side opening of the outer-side cylinder (150) is sealed by a gasket (146), and in which a space between an inner circumferential surface of the through-hole (143) and an outer circumferential surface of the rod (230) is sealed by a second packing (147);
a piston (220) provided near one end of the rod (230) positioned on an inner side of the inner-side cylinder (160) to be slidable on an inner circumferential surface of the inner-side cylinder (160);
an inner-side-cylinder-other-end-side liquid storage chamber (52) surrounded by the rod guide (145), the piston (220), and the inner circumferential surface of the inner-side cylinder (160);
a connection hole (163) formed in a cylinder wall near the other-end-side opening of the inner-side cylinder (160) to pass through the inner side of the inner-side cylinder (160) and the inner side of the outer-side cylinder (150); and
a liquid stored inside the outer tube (210) and the inner tube (110),
the telescopic device (2) being configured to perform a compression operation of allowing the one-end-side attachment portion (100) and the other-end-side attachment portion (200) to move closer to each other and an extension operation of allowing the one-end-side attachment portion (100) and the other-end-side attachment portion (200) to move away from each other,
the damping force generating device (3) being attached to the one-end-side attachment portion (100) and including:
a first entrance port (71) that is connected to an inner-side-cylinder-one-end-side liquid storage chamber (51) positioned closer to the one end side than the piston (220) on the inner side of the inner-side cylinder (160) through a first connection path (131) formed in the one-end-side attachment portion (100);
a second entrance port (72) that is connected to an annular cylinder liquid storage chamber (53) formed between the outer circumferential surface on one end side of the inner-side cylinder (160) and the inner circumferential surface on one end side of the outer-side cylinder (150) through a second connection path (132) formed in the one-end-side attachment portion (100);
a third entrance port (73); and
a compression-operation passage and an extension-operation passage that generate damping force, using a passage resistance when liquid passes,
during the compression operation, the damping force generating device (3) generates damping force using a passage resistance when liquid, which is pressurized by the piston (220) to flow through the first entrance port (71) from the inner-side-cylinder-one-end-side liquid storage chamber (51), flows through the compression-operation passage, thereby allowing the liquid to flow into the annular cylinder liquid storage chamber (53) through the second entrance port (72),
during the extension operation, the damping force generating device (3) generating damping force using a passage resistance when liquid, which is pressurized by the piston (220) to flow through the second entrance port (72) from the inner-side-cylinder-other-end-side liquid storage chamber (52) after passing through the connection hole (163) and the annular cylinder liquid storage chamber (53) passes through the extension-operation passage, thereby allowing the liquid to flow into the inner-side-cylinder-one-end-side liquid storage chamber (51) through the first entrance port (71),
the compensating device (4) including:
a cylindrical cylinder (10); and
a free piston (11) provided in the cylinder (10) to be movable along a central axis of the cylinder (10),
a one-end-side opening of the cylinder (10) being attached to the one-end-side attachment portion (100) while the other-end-side opening of the cylinder (10) is hermetically sealed, and a liquid-volume-variation-compensating liquid storage chamber (28) formed on a side of the one-end-side opening of the cylinder (10) is connected to the third entrance port (73) of the damping force generating device (3) through a third connection path (133) formed in the one-end-side attachment portion (100),
during the compression operation, the free piston (11) moving toward the other end side by the pressure of the liquid flowing from the damping force generating device (3) into the liquid-volume-variation-compensating liquid storage chamber (28) through the third entrance port (73), and
during the extension operation, the liquid in the liquid-volume-variation-compensating liquid storage chamber (28) flowing into the damping force generating device (3) through the third entrance port (73) whereby the free piston (11) moves toward the one end side,
the suspension device (1) **characterized in that** a liquid discharge port (26) formed in the liquid-volume-variation-compensating liquid storage chamber (28) of the compensating device (4);
an outer annular liquid storage chamber (56) formed between the outer circumferential surface on the one end side of the outer-side cylinder (150) and the inner circumferential surface of the one end side of the inner tube (110); and
a liquid discharge path that connects the liquid discharge port (26) and the outer annular liquid storage chamber (56),
the compensating device (4) including an opening/closing control mechanism that opens the liquid discharge port (26) to allow the liquid-volume-variation-compensating liquid storage chamber (28) and the liquid discharge path to be connected to each other so that the liquid in the liquid-volume-variation-compensating liquid storage chamber (28) flows into the outer annular liquid storage chamber (56) through the liquid discharge port (26) and the liquid discharge path when an amount of the liquid in the liquid-volume-variation-compensating liquid storage chamber (28) exceeds a predetermined amount, and that closes the liquid discharge port (26) to block the connection between the liquid-volume-variation-compensating liquid storage chamber (28) and the liquid discharge path when the amount of the liquid in the liquid-volume-variation-compensating liquid storage chamber (28) does not exceed the predetermined amount,
wherein, in a case where the liquid outside the outer-side cylinder (150) enters into the liquid-volume-variation-compensating liquid storage chamber (28) of the compensating device (4) through a space between the outer circumferential surface of the rod (230) and the second packing (147), the inner side of the inner-side cylinder (160), the connection hole (163), the annular cylinder liquid storage chamber (53), and the damping force generating device (3), and then the amount of the liquid in the liquid-volume-variation-compensating liquid storage chamber (28) exceeds the predetermined amount, the liquid in the liquid-volume-variation-compensating liquid storage chamber (28) returns to an outside of the outer-side cylinder (150) through the liquid discharge port (26), the liquid discharge path, and the outer annular liquid storage chamber (56).

2. The suspension device according to claim 1, wherein
the cylinder (10) of the compensating device (4) includes an outer cylinder (12) and an inner cylinder (13),
a compensating-device-side path (25) of the liquid discharge path is formed by an annular space formed between an inner circumferential surface of the outer cylinder (12) and an outer circumferential surface of the inner cylinder (13),
a one-end-side path (134) of the liquid discharge path that allows the compensating-device-side path (25) and the outer annular liquid storage chamber (56) to be connected to each other is formed in the one-end-side attachment portion (100),
the liquid discharge port (26) is formed in a wall surface of the inner cylinder (13) to pass through the inner side of the inner cylinder (13) and the compensating-device-side path (25),
the opening/closing control mechanism is formed by an annular sealing member (27) which is provided on an outer circumferential surface of the free piston (11) to maintain a liquid-tight state with the inner circumferential surface of the inner cylinder (13), and which blocks the connection between the liquid discharge port (26) and the liquid-volume-variation-compensating liquid storage chamber (28) formed on the one end side of the inner cylinder (13) when the annular sealing member (27) is positioned closer to the one end side than the liquid discharge port (26), and which allows the connection between the liquid discharge port (26) and the liquid-volume-variation-compensating liquid storage chamber (28) formed on the one end side of the inner cylinder (13) when the annular sealing member (27) is positioned closer to the other end side than the liquid discharge port (26).

3. The suspension device according to claim 1 or 2, wherein
a tool insertion hole (135), through which a tool for rotating the rod guide (145) to allow the outer circumferential surface of the rod guide (145) to engage with the inner circumferential surface of the outer-side cylinder (150) is inserted, is formed on the other end side of a through-hole (136) formed in the rod guide (145), and
the liquid storage chamber is formed between an inner circumferential surface of the tool insertion hole (135) and the outer circumferential surface of the rod (230).

4. The suspension device according to any one of claims 1 to 3, further comprising:
a cylindrical spring collar (310), one end side of which is inserted into the inner tube (110) through the other-end-side opening of the inner tube (110) and the other end side of which is attached to and sealed by the other-end-side attachment portion (200); and
a spring (300) disposed in the outer annular liquid storage chamber (56) between one end of the spring collar (310) and the one-end-side attachment portion (100) to absorb a shock during the compression operation of the telescopic device (2).

5. The suspension device according to claim 4, wherein
the other-end-side attachment portion (200) includes an adjuster (260) for adjusting a length of the spring (300) by moving the spring collar (310) along a central axis of the telescopic device (2).

6. The suspension device according to any one of claims 1 to 5, wherein
the one-end-side attachment portion (100) is connected to an axle side of a motorcycle, and the other-end-side attachment portion (200) is connected to a vehicle body side of the motorcycle.

## Patentansprüche

1. Aufhängungsvorrichtung (1), die eine Teleskopvorrichtung (2), eine Dämpfkrafterzeugungsvorrichtung (3) und eine Ausgleichsvorrichtung (4) umfasst,
wobei die Teleskopvorrichtung (2) Folgendes aufweist:
ein zylindrisches Außenrohr (210), dessen eines Ende offen und dessen anderes Ende an dem Befestigungsabschnitt (200) auf der anderen Stirnseite befestigt ist;
ein zylindrisches Innenrohr (110), dessen eine Stirnseite mit einem Befestigungsabschnitt (100) auf der einen Stirnseite befestigt ist und dessen Öffnung auf der anderen Stirnseite durch eine Öffnung des Außenrohres (210) auf der einen Stirnseite in das Außenrohr (210) eingebracht ist;
eine erste Packung (215), die auf einer Innenseite nahe der Öffnung des Außenrohres (210) auf der einen Stirnseite so bereitgestellt ist, dass sie eine Außenumfangsfläche des Innenrohres (110) verschließt;
einen zylindrischen Außenseitenzylinder (150), der auf einer Innenseite des Innenrohres (110) angeordnet ist und dessen eine Stirnseite an dem Befestigungsabschnitt (100) auf der einen Stirnseite befestigt ist;
einen zylindrischen Innenseitenzylinder (160), der auf einer Innenseite des Außenseitenzylinders (150) angeordnet ist und dessen eine Stirnseite an dem Befestigungsabschnitt (100) auf der einen Stirnseite befestigt ist;
eine Stange (230), dessen andere Stirnseite an dem Befestigungsabschnitt (200) auf der anderen Stirnseite befestigt ist und dessen eine Stirnseite durch die Öffnung des Innenseitenzylinders (160) auf der anderen Stirnseite in den Innenseitenzylinder (160) eingebracht ist;
eine Stangenführung (145), die aus einem ringförmigen Säulenkörper gebildet ist und ein Durchgangsloch (143) besitzt, um zu ermöglichen, dass die Stange (230) hindurchverläuft, und wobei eine Außenumfangsfläche eine Innenumfangsfläche nahe der Öffnung des Außenseitenzylinders (150) auf der anderen Stirnseite und eine Innenumfangsfläche nahe der Öffnung des Innenseitenzylinders (160) auf der anderen Stirnseite in Eingriff nimmt, wodurch ein Raum zwischen der Außenumfangsfläche der Stangenführung (145) und der Innenumfangsfläche nahe der Öffnung des Außenseitenzylinders (150) auf der anderen Stirnseite durch einen Dichtungsring (146) verschlossen ist und wobei ein Raum zwischen einer Innenumfangsfläche des Durchgangslochs (143) und einer Außenumfangsfläche der Stange (230) durch eine zweite Packung (147) verschlossen ist;
einen Kolben (220), der nahe einem Ende der Stange (230) vorgesehen und auf einer Innenseite des Innenseitenzylinders (160) positioniert ist, um auf einer Innenumfangsfläche des Innenseitenzylinders (160) verschiebbar zu sein;
eine Flüssigkeitsspeicherkammer (52) auf der anderen Stirnseite des Innenseitenzylinders, die durch die Stangenführung (145), den Kolben (220) und die Innenumfangsfläche des Innenseitenzylinders (160) umgeben ist;
ein Verbindungsloch (163), das in einer Zylinderwand nahe der Öffnung des Innenseitenzylinders (160) auf der anderen Stirnseite gebildet ist, um durch die Innenseite des Innenseitenzylinders (160) und die Innenseite des Außenseitenzylinders (150) zu verlaufen; und
eine Flüssigkeit, die im Inneren des Außenrohres (210) und des Innenrohres (110) gespeichert ist,
wobei die Teleskopvorrichtung (2) konfiguriert ist, einen Kompressionsvorgang des Ermöglichens einer Bewegung des Befestigungsabschnitts (100) auf der einen Stirnseite und des Befestigungsabschnitts (200) auf der anderen Stirnseite näher zueinander und einen Aufweitungsvorgang des Ermöglichens einer Bewegung des Befestigungsabschnitts (100) auf der einen Stirnseite und des Befestigungsabschnitts (200) auf der anderen Stirnseite voneinander weg vorzunehmen,
wobei die Dämpfkrafterzeugungsvorrichtung (3) an dem Befestigungsabschnitt (100) auf der einen Stirnseite befestigt ist und Folgendes aufweist:
einen ersten Eingangsanschluss (71), der mit einer Flüssigkeitsspeicherkammer (51) auf der einen Stirnseite des Innenseitenzylinders verbunden ist, die näher an der einen Stirnseite als der Kolben (220) auf der Innenseite des Innenseitenzylinders (160) durch einen ersten Verbindungsweg (131) positioniert ist, der in dem Befestigungsabschnitt (100) auf der einen Stirnseite gebildet ist;
einen zweiten Eingangsanschluss (72), der mit einer ringförmigen Zylinderflüssigkeitsspeicherkammer (53) verbunden ist, die zwischen der Außenumfangsfläche auf einer Stirnseite des Innenseitenzylinders (160) und der Innenumfangsfläche auf einer Stirnseite des Außenseitenzylinders (150) durch einen zweiten Verbindungsweg (132) gebildet ist, der in dem Befestigungsabschnitt (100) auf der einen Stirnseite gebildet ist;
einen dritten Eingangsanschluss (73); und
einen Kompressionsvorgangsdurchgang und einen Aufweitungsvorgangsdurchgang, die unter Verwendung eines Durchgangswiderstands, wenn Flüssigkeit hindurchströmt, Dämpfkraft erzeugen,
während des Kompressionsvorgangs die Dämpfkrafterzeugungsvorrichtung (3) unter Verwendung eines Durchgangswiderstands, wenn Flüssigkeit, die durch den Kolben (220) druckbeaufschlagt ist, um aus der Flüssigkeitsspeicherkammer (51) auf der einen Stirnseite des Innenseitenzylinders durch den ersten Eingangsanschluss (71) zu strömen, durch den Kompressionsvorgangsdurchgang hindurchströmt, Dämpfkraft erzeugt, wodurch ermöglicht wird, dass die Flüssigkeit durch den zweiten Eingangsanschluss (72) in die ringförmige Zylinderflüssigkeitsspeicherkammer (53) strömt,
während des Aufweitungsvorgangs die Dämpfkrafterzeugungsvorrichtung (3) unter Verwendung eines Durchgangswiderstands, wenn Flüssigkeit, die durch den Kolben (220) druckbeaufschlagt ist, um aus der Flüssigkeitsspeicherkammer (52) auf der anderen Stirnseite des Innenseitenzylinders durch den zweiten Eingangsanschluss (72) zu strömen, durch den Aufweitungsvorgangsdurchgang hindurchströmt, nachdem sie durch das Verbindungsloch (163) und die ringförmige Zylinderflüssigkeitsspeicherkammer (53) geströmt ist, Dämpfkraft erzeugt, wodurch ermöglicht wird, dass die Flüssigkeit durch den ersten Eingangsanschluss (71) in die Flüssigkeitsspeicherkammer (51) auf der einen Stirnseite des Innenseitenzylinders strömt,
wobei die Ausgleichsvorrichtung (4) Folgendes aufweist:
einen zylindrischen Zylinder (10); und
einen freien Kolben (11), der in dem Zylinder (10) vorgesehen ist, um entlang einer Mittelachse des Zylinders (10) bewegbar zu sein,
wobei eine Öffnung des Zylinders (10) auf der einen Stirnseite an dem Befestigungsabschnitt (100) auf der einen Stirnseite befestigt ist, während die Öffnung des Zylinders (10) auf der anderen Stirnseite hermetisch verschlossen ist, und eine Veränderung des Flüssigkeitsvolumens ausgleichende Flüssigkeitsspeicherkammer (28), die auf einer Seite der Öffnung des Zylinders (10) auf der einen Stirnseite gebildet ist, durch einen dritten Verbindungsweg (133), der in dem Befestigungsabschnitt (100) auf der einen Stirnseite gebildet ist, mit dem dritten Eingangsanschluss (73) der Dämpfkrafterzeugungsvorrichtung (3) verbunden ist,
wobei sich während des Kompressionsvorgangs der freie Kolben (11) durch den Druck der Flüssigkeit, die aus der Dämpfkrafterzeugungsvorrichtung (3) durch den dritten Eingangsanschluss (73) in die eine Veränderung des Flüssigkeitsvolumens ausgleichende Flüssigkeitsspeicherkammer (28) strömt, auf die andere Stirnseite zubewegt und
während des Aufweitungsvorgangs die Flüssigkeit in der eine Veränderung des Flüssigkeitsvolumens ausgleichenden Flüssigkeitsspeicherkammer (28) durch den dritten Eingangsanschluss (73) in die Dämpfkrafterzeugungsvorrichtung (3) strömt, wodurch der freie Kolben (11) sich auf die eine Stirnseite zubewegt,
wobei die Aufhängungsvorrichtung (1) **dadurch gekennzeichnet ist, dass**
ein Flüssigkeitsaustragsanschluss (26) in der eine Veränderung des Flüssigkeitsvolumens ausgleichenden Flüssigkeitsspeicherkammer (28) der Ausgleichsvorrichtung (4) gebildet ist;
eine äußere ringförmige Flüssigkeitsspeicherkammer (56) zwischen der Außenumfangsoberfläche auf der einen Stirnseite des Außenseitenzylinders (150) und der Innenumfangsfläche der einen Stirnseite des Innenrohres (110) gebildet ist; und
ein Flüssigkeitsaustragsweg den Flüssigkeitsaustragsanschluss (26) und die äußere ringförmige Flüssigkeitsspeicherkammer (56) verbindet,
wobei die Ausgleichsvorrichtung (4) einen Mechanismus zum Steuern des Öffnens und Schließens aufweist, der den Flüssigkeitsaustragsanschluss (26) öffnet, um zu ermöglichen, dass die eine Veränderung des Flüssigkeitsvolumens ausgleichende Flüssigkeitsspeicherkammer (28) und der Flüssigkeitsaustragsweg miteinander verbunden werden, sodass die Flüssigkeit in der eine Veränderung des Flüssigkeitsvolumens ausgleichenden Flüssigkeitsspeicherkammer (28) durch den Flüssigkeitsaustragsanschluss (26) und den Flüssigkeitsaustragsweg in die äußere ringförmige Flüssigkeitsspeicherkammer (56) strömt, wenn eine Menge der Flüssigkeit in der eine Veränderung des Flüssigkeitsvolumens ausgleichenden Flüssigkeitsspeicherkammer (28) eine vorbestimmte Menge überschreitet, und die den Flüssigkeitsaustragsanschluss (26) schließt, um die Verbindung zwischen der eine Veränderung des Flüssigkeitsvolumens ausgleichenden Flüssigkeitsspeicherkammer (28) und dem Flüssigkeitsaustragsweg zu blockieren, wenn die Menge der Flüssigkeit in der eine Veränderung des Flüssigkeitsvolumens ausgleichenden Flüssigkeitsspeicherkammer (28) die vorbestimmte Menge nicht überschreitet,
wobei in einem Fall, in dem die Flüssigkeit außerhalb des Außenseitenzylinders (150) durch einen Raum zwischen der Außenumfangsfläche der Stange (230) und der zweiten Packung (147), die Innenseite des Innenseitenzylinders (160), das Verbindungsloch (163), die ringförmige Zylinderflüssigkeitsspeicherkammer (53) und die Dämpfkrafterzeugungsvorrichtung (3) in die eine Veränderung des Flüssigkeitsvolumens ausgleichende Flüssigkeitsspeicherkammer (28) der Ausgleichsvorrichtung (4) eintritt und dann die Menge der Flüssigkeit in der eine Veränderung des Flüssigkeitsvolumens ausgleichenden Flüssigkeitsspeicherkammer (28) die vorbestimmte Menge überschreitet, die Flüssigkeit in der eine Veränderung des Flüssigkeitsvolumens ausgleichenden Flüssigkeitsspeicherkammer (28) durch den Flüssigkeitsaustragsanschluss (26), den Flüssigkeitsaustragsweg und die äußere ringförmige Flüssigkeitsspeicherkammer (56) auf eine Außenseite des Außenseitenzylinders (150) zurückkehrt.

2. Aufhängungsvorrichtung nach Anspruch 1, wobei
der Zylinder (10) der Ausgleichsvorrichtung (4) einen Außenzylinder (12) und einen Innenzylinder (13) aufweist,
ein Weg (25) des Flüssigkeitsaustragswegs auf der Seite der Ausgleichsvorrichtung durch einen ringförmigen Raum gebildet ist, der zwischen einer Innenumfangsfläche des Außenzylinders (12) und einer Außenumfangsfläche des Innenzylinders (13) gebildet ist,
ein Weg (134) des Flüssigkeitsaustragswegs auf der einen Stirnseite, der ermöglicht, dass der Weg (25) auf der Seite der Ausgleichsvorrichtung und die äußere ringförmige Flüssigkeitsspeicherkammer (56) miteinander verbunden werden, in dem Befestigungsabschnitt (100) auf der einen Stirnseite gebildet ist,
der Flüssigkeitsaustragsanschluss (26) in einer Wandoberfläche des Innenzylinders (13) gebildet ist, um durch die Innenseite des Innenzylinders (13) und den Weg (25) auf der Seite der Ausgleichsvorrichtung zu verlaufen,
der Mechanismus zum Öffnen und Schließen durch ein ringförmiges Dichtungselement (27) gebildet ist, das auf einer Außenumfangsfläche des freien Kolbens (11) vorgesehen ist, um einen flüssigkeitsdichten Zustand mit der Innenumfangsfläche des Innenzylinders (13) aufrecht zu erhalten, und das die Verbindung zwischen dem Flüssigkeitsaustragsanschluss (26) und der eine Veränderung des Flüssigkeitsvolumens ausgleichenden Flüssigkeitsspeicherkammer (28), die auf der einen Stirnseite des Innenzylinders (13) gebildet ist, blockiert, wenn das ringförmige Dichtungselement (27) näher an der einen Stirnseite positioniert ist als der Flüssigkeitsaustragsanschluss (26), und das die Verbindung zwischen dem Flüssigkeitsaustragsanschluss (26) und der eine Veränderung des Flüssigkeitsvolumens ausgleichenden Flüssigkeitsspeicherkammer (28), die auf der einen Stirnseite des Innenzylinders (13) gebildet ist, ermöglicht, wenn das ringförmige Dichtungselement (27) näher an der anderen Stirnseite positioniert ist als der Flüssigkeitsaustragsanschluss (26).

3. Aufhängungsvorrichtung nach Anspruch 1 oder 2, wobei
ein Werkzeugeinsatzloch (135), durch das ein Werkzeug zum Drehen der Stangenführung (145) eingesetzt wird, um zu ermöglichen, dass die Außenumfangsfläche der Stangenführung (145) die Innenumfangsfläche des Außenseitenzylinders (150) in Eingriff nimmt, auf der anderen Stirnseite eines Durchgangslochs (136) gebildet ist, das in der Stangenführung (145) gebildet ist, und
die Flüssigkeitsspeicherkammer zwischen einer Innenumfangsfläche des Werkzeugeinsatzlochs (135) und der Außenumfangsfläche der Stange (230) gebildet ist.

4. Aufhängungsvorrichtung nach einem der Ansprüche 1 bis 3, weiterhin umfassend:
einen zylindrischen Federteller (310), dessen eine Stirnseite durch die Öffnung des Innenrohres (110) auf der anderen Stirnseite in das Innenrohr (110) eingesetzt wird und dessen andere Stirnseite an dem Befestigungsabschnitt (200) auf der anderen Stirnseite befestigt und durch diesen verschlossen ist; und
eine Feder (300), die in der äußeren ringförmigen Flüssigkeitsspeicherkammer (56) zwischen einem Ende des Federtellers (310) und dem Befestigungsabschnitt (100) auf der einen Stirnseite vorgesehen ist, um eine Erschütterung während des Kompressionsvorgangs der Teleskopvorrichtung (2) abzufangen.

5. Aufhängungsvorrichtung nach Anspruch 4, wobei der Befestigungsabschnitt (200) auf der anderen Stirnseite eine Verstelleinrichtung (260) zum Verstellen einer Länge der Feder (300) durch Bewegen des Federtellers (310) entlang einer Mittelachse der Teleskopvorrichtung (2) aufweist.

6. Aufhängungsvorrichtung nach einem der Ansprüche 1 bis 5, wobei der Befestigungsabschnitt (100) auf der einen Stirnseite mit einer Achsenseite eines Motorrads verbunden ist und der Befestigungsabschnitt (200) auf der anderen Stirnseite mit einer Karosserieseite des Motorrads verbunden ist.

## Revendications

1. Dispositif de suspension (1) comprenant un dispositif télescopique (2), un dispositif générateur de force d'amortissement (3) et un dispositif de compensation (4) ;
le dispositif télescopique (2) incluant :
un tube extérieur cylindrique (210), dont une extrémité est ouverte et l'autre extrémité est fixée à la partie de fixation du côté de l'autre extrémité (200) ;
un tube intérieur cylindrique (110), dont le côté d'une extrémité est fixé à une partie de fixation du côté d'une extrémité (100), et dont l'ouverture du côté de l'autre extrémité est insérée dans le tube extérieur (210) à travers une ouverture du côté d'une extrémité du tube extérieur (210) ;
une première garniture (215) prévue sur un côté intérieur à proximité de l'ouverture du côté d'une extrémité du tube extérieur (210) de manière à assurer l'étanchéité d'une surface circonférentielle extérieure du tube intérieur (110) ;
un cylindre de côté extérieur cylindrique (150) qui est disposé sur un côté intérieur du tube intérieur (110), et dont le côté d'une extrémité est fixé à la partie de fixation du côté d'une extrémité (100) ;
un cylindre de côté intérieur cylindrique (160) qui est disposé sur un côté intérieur du cylindre de côté extérieur (150) et dont le côté d'une extrémité est fixé à la partie de fixation du côté d'une extrémité (100) ;
une tige (230), dont le côté de l'autre extrémité est fixé à la partie de fixation du côté de l'autre extrémité (200) et dont le côté d'une extrémité est inséré dans le cylindre de côté intérieur (160) à travers l'ouverture du côté de l'autre extrémité du cylindre de côté intérieur (160) ;
un guide de tige (145) qui est formé d'un corps colonnaire annulaire ayant un trou traversant (143) destiné à permettre à la tige (230) de passer à travers celui-ci, et dans lequel une surface circonférentielle extérieure est en prise avec une surface circonférentielle intérieure à proximité de l'ouverture du côté de l'autre extrémité du cylindre de côté extérieur (150) et une surface circonférentielle intérieure à proximité de l'ouverture du côté de l'autre extrémité du cylindre de côté intérieur (160), selon lequel un espace entre la surface circonférentielle extérieure du guide de tige (145) et la surface circonférentielle intérieure à proximité de l'ouverture du côté de l'autre extrémité du cylindre de côté extérieur (150) est mis en étanchéité par un joint (146), et dans lequel un espace entre une surface circonférentielle intérieure du trou traversant (143) et une surface circonférentielle extérieure de la tige (230) est mis en étanchéité par une deuxième garniture (147) ;
un piston (220) prévu à proximité d'une extrémité de la tige (230) positionné sur un côté intérieur du cylindre de côté intérieur (160) pour pouvoir être glissé sur une surface circonférentielle intérieure du cylindre de côté intérieur (160) ;
une chambre de stockage de liquide du côté de l'autre extrémité du cylindre de côté intérieur (52) entourée par le guide de tige (145), le piston (220) et la surface circonférentielle intérieure du cylindre de côté intérieur (160) ;
un trou de connexion (163) formé dans une paroi de cylindre à proximité de l'ouverture du côté de l'autre extrémité du cylindre de côté intérieur (160) pour passer à travers le côté intérieur du cylindre de côté intérieur (160) et le côté intérieur du cylindre de côté extérieur (150) ; et
un liquide stocké à l'intérieur du tube extérieur (210) et du tube intérieur (110),
le dispositif télescopique (2) étant configuré pour réaliser une opération de compression permettant à la partie de fixation du côté d'une extrémité (100) et à la partie de fixation du côté de l'autre extrémité (200) de se rapprocher l'une de l'autre et une opération d'extension permettant à la partie de fixation du côté d'une extrémité (100) et à la partie de fixation du côté de l'autre extrémité (200) de s'éloigner l'une de l'autre,
le dispositif générateur de force d'amortissement (3) étant fixé à la partie de fixation du côté d'une extrémité (100) et incluant :
un premier orifice d'entrée (71) qui est connecté à une chambre de stockage de liquide du côté d'une extrémité du cylindre de côté intérieur (51) positionnée plus proche du côté d'une extrémité que le piston (220) sur le côté intérieur du cylindre de côté intérieur (160) à travers une première voie de connexion (131) formée dans la partie de fixation du côté d'une extrémité (100) ;
un deuxième orifice d'entrée (72) qui est connecté à une chambre de stockage de liquide de cylindre annulaire (53) formée entre la surface circonférentielle extérieure sur le côté d'une extrémité du cylindre de côté intérieur (160) et la surface circonférentielle intérieure sur le côté d'une extrémité du cylindre de côté extérieur (150) à travers une seconde voie de connexion (132) formée dans une partie de fixation du côté d'une extrémité (100) ;
un troisième orifice d'entrée (73) ; et
un passage d'opération de compression et un passage d'opération d'extension qui génèrent une force d'amortissement, à l'aide d'une résistance de passage lorsque le liquide passe,
pendant l'opération de compression, le dispositif générateur de force d'amortissement (3) génère une force d'amortissement à l'aide d'une résistance de passage lorsque le liquide, qui est mis sous pression par le piston (220) pour s'écouler à travers le premier orifice d'entrée (71) depuis la chambre de stockage de liquide du côté d'une extrémité du cylindre de côté intérieur (51), s'écoule à travers le passage d'opération de compression, permettant de ce fait au liquide de s'écouler dans la chambre de stockage de liquide de cylindre annulaire (53) à travers le deuxième orifice d'entrée (72),
pendant l'opération d'extension, le dispositif générateur de force d'amortissement (3) générant une force d'amortissement à l'aide d'une résistance de passage lorsque le liquide, qui est mis sous pression par le piston (220) pour s'écouler à travers le deuxième orifice d'entrée (72) depuis la chambre de stockage de liquide du côté de l'autre extrémité du cylindre de côté intérieur (52) après être passé à travers le trou de connexion (163) et la chambre de stockage de liquide de cylindre annulaire (53) passe à travers le passage d'opération d'extension, permettant de ce fait au liquide de s'écouler dans la chambre de stockage de liquide du côté d'une extrémité du cylindre de côté intérieur (51) à travers le premier orifice d'entrée (71),
le dispositif de compensation (4) incluant :
un cylindre cylindrique (10) ; et
un piston libre (11) prévu dans le cylindre (10) pour être mobile le long d'un axe central du cylindre (10),
une ouverture du côté d'une extrémité du cylindre (10) étant fixée à la partie de fixation du côté d'une extrémité (100) tandis que l'ouverture du côté de l'autre extrémité du cylindre (10) est hermétiquement mise en étanchéité, et une chambre de stockage de liquide à compensation de variation de volume de liquide (28) formée sur un côté de l'ouverture du côté d'une extrémité du cylindre (10) est connectée au troisième orifice d'entrée (73) du dispositif générateur de force d'amortissement (3) à travers une troisième voie de connexion (133) formée dans la partie de fixation du côté d'une extrémité (100),
pendant l'opération de compression, le piston libre (11) bougeant vers le côté de l'autre extrémité par la pression du liquide s'écoulant depuis le dispositif générateur de force d'amortissement (3) dans la chambre de stockage de liquide à compensation de variation de volume de liquide (28) à travers le troisième orifice d'entrée (73), et
pendant l'opération d'extension, le liquide dans la chambre de stockage de liquide à compensation de variation de volume de liquide (28) s'écoulant dans le dispositif générateur de force d'amortissement (3) à travers le troisième orifice d'entrée (73), selon lequel le piston libre (11) bouge vers le côté d'une extrémité,
le dispositif de suspension (1) **caractérisé en ce que**
un orifice d'évacuation de liquide (26) formé dans la chambre de stockage de liquide à compensation de variation de volume de liquide (28) du dispositif de compensation (4) ;
une chambre de stockage de liquide annulaire extérieure (56) formée entre la surface circonférentielle extérieure sur le côté d'une extrémité du cylindre de côté extérieur (150) et la surface circonférentielle intérieure du côté d'une extrémité du tube intérieur (110) ; et
une voie d'évacuation de liquide qui connecte l'orifice d'évacuation de liquide (26) et la chambre de stockage de liquide annulaire extérieure (56),
le dispositif de compensation (4) incluant un mécanisme de commande d'ouverture/fermeture qui ouvre l'orifice d'évacuation de liquide (26) pour permettre à la chambre de stockage de liquide à compensation de variation de volume de liquide (28) et la voie d'évacuation de liquide d'être connectées l'une à l'autre de sorte que le liquide dans la chambre de stockage de liquide à compensation de variation de volume de liquide (28) s'écoule dans la chambre de stockage de liquide annulaire extérieure (56) à travers l'orifice d'évacuation de liquide (26) et la voie d'évacuation de liquide lorsqu'une quantité du liquide dans la chambre de stockage de liquide à compensation de variation de volume de liquide (28) dépasse une quantité prédéterminée, et qui ferme l'orifice d'évacuation de liquide (26) pour bloquer la connexion entre la chambre de stockage de liquide à compensation de variation de volume de liquide (28) et la voie d'évacuation de liquide lorsque la quantité du liquide dans la chambre de stockage de liquide à compensation de variation de volume de liquide (28) ne dépasse pas la quantité prédéterminée,
dans lequel, dans un cas où le liquide à l'extérieur du cylindre de côté extérieur (150) entre dans la chambre de stockage de liquide à compensation de variation de volume de liquide (28) du dispositif de compensation (4) à travers un espace entre la surface circonférentielle extérieure de la tige (230) et la seconde garniture (147), le côté intérieur du cylindre de côté intérieur (160), le trou de connexion (163), la chambre de stockage de liquide de cylindre annulaire (53), et le dispositif générateur de force d'amortissement (3), puis la quantité du liquide dans la chambre de stockage de liquide à compensation de variation de volume de liquide (28) dépasse la quantité prédéterminée, le liquide dans la chambre de stockage de liquide à compensation de variation de volume de liquide (28) revient vers un extérieur du cylindre de côté extérieur (150) à travers l'orifice d'évacuation de liquide (26), la voie d'évacuation de liquide et la chambre de stockage de liquide annulaire extérieure (56).

2. Dispositif de suspension selon la revendication 1, dans lequel
le cylindre (10) du dispositif de compensation (4) inclut un cylindre extérieur (12) et un cylindre intérieur (13),
une voie du côté du dispositif de compensation (25) de la voie d'évacuation de liquide est formée par un espace annulaire formé entre une surface circonférentielle intérieure du cylindre extérieur (12) et une surface circonférentielle extérieure du cylindre intérieur (13),
une voie du côté d'une extrémité (134) de la voie d'évacuation de liquide qui permet à la voie du côté du dispositif de compensation (25) et à la chambre de stockage de liquide annulaire extérieure (56) d'être connectées l'une à l'autre est formée dans la partie de fixation du côté d'une extrémité (100),
l'orifice d'évacuation de liquide (26) est formé dans une surface de paroi du cylindre intérieur (13) pour passer à travers le côté intérieur du cylindre intérieur (13) et la voie du côté du dispositif de compensation (25),
le mécanisme de commande d'ouverture/fermeture est formé par un élément de mise en étanchéité annulaire (27) qui est prévu sur une surface circonférentielle extérieure du piston libre (11) pour maintenir un état d'étanchéité liquide avec la surface circonférentielle intérieure du cylindre intérieur (13), et qui bloque la connexion entre l'orifice d'évacuation de liquide (26) et la chambre de stockage de liquide à compensation de variation de volume de liquide (28) formée sur le côté d'une extrémité du cylindre intérieur (13) lorsque l'élément de mise en étanchéité annulaire (27) est positionné plus proche du côté d'une extrémité que de l'orifice d'évacuation de liquide (26) et qui permet la connexion entre l'orifice d'évacuation de liquide (26) et la chambre de stockage de liquide à compensation de variation de volume de liquide (28) formée sur le côté d'une extrémité du cylindre intérieur (13) lorsque l'élément de mise en étanchéité annulaire (27) est positionné plus proche du côté de l'autre extrémité que de l'orifice d'évacuation de liquide (26).

3. Dispositif de suspension selon la revendication 1 ou 2, dans lequel
un trou d'insertion d'outil (135), à travers lequel un outil destiné à faire tourner le guide de tige (145) pour permettre à la surface circonférentielle extérieure du guide de tige (145) de se mettre en prise avec la surface circonférentielle intérieure du cylindre de côté extérieur (150) est inséré, est formé sur le côté de l'autre extrémité d'un trou traversant (136) formé dans le guide de tige (145), et
la chambre de stockage de liquide est formée entre une surface circonférentielle du trou d'insertion d'outil (135) et la surface circonférentielle extérieure de la tige (230).

4. Dispositif de suspension selon l'une quelconque des revendications 1 à 3, comprenant en outre :
un collier à ressort cylindrique (310), dont le côté d'une extrémité est inséré dans le tube intérieur (110) à travers l'ouverture du côté de l'autre extrémité (110) et dont le côté de l'autre extrémité est fixé à et mis en étanchéité par la partie de fixation du côté de l'autre extrémité (200) ; et
un ressort (300) disposé dans la chambre de stockage de liquide annulaire extérieure (56) entre une extrémité du collier à ressort (310) et la partie de fixation du côté d'une extrémité (100) pour absorber un choc pendant l'opération de compression du dispositif télescopique (2).

5. Dispositif de suspension selon la revendication 4, dans lequel
la partie d'extrémité du côté de l'autre extrémité (200) inclut un dispositif d'ajustement (260) destiné à ajuster une longueur du ressort (300) en bougeant le collier à ressort (310) le long d'un axe central du dispositif télescopique (2).

6. Dispositif de suspension selon l'une quelconque des revendications 1 à 5, dans lequel
la partie d'extrémité du côté d'une extrémité (100) est connectée à un côté d'essieu d'une moto, et la partie de fixation du côté de l'autre extrémité (200) est connectée à un côté de carrosserie de véhicule de la moto.
